# EUROPEAN PATENT APPLICATION

(11) **EP 4 723 466 A1**
(43) Date of publication of application: **08.04.2026**
(21) Application number: 24819083.7
(22) Date of filing: 10.05.2024
(51) Int. Cl.: H02M 7/48

(54) **POWER CONVERSION DEVICE AND PROGRAM**

(30) Priority: 05.06.2023 JP 2023092246
(71) Applicant: DENSO CORPORATION, Kariya-city, Aichi 448-8661 (JP)
(72) Inventor: MIYOSHI, Fumiyasu, Kariya- city, Aichi 4488661 (JP); SASAMA, Yuta, Kariya- city, Aichi 4488661 (JP); TOYAMA, Keisuke, Kariya- city, Aichi 4488661 (JP); KURACHI, Taisuke, Kariya- city, Aichi 4488661 (JP); KAZAOKA, Ryoya, Kariya- city, Aichi 4488661 (JP); IWAMURA, Takahiro, Kariya- city, Aichi 4488661 (JP); KUBO, Shunichi, Kariya- city, Aichi 4488661 (JP)
(74) Representative: TBK
(86) International application number: PCT/JP2024/017409
(87) International publication number: WO 2024/252846

(57) **Abstract**

A power conversion device includes a high-potential side path (22H) that electrically connects a positive electrode terminal of a first electrical storage unit (31) and a high-potential side terminal of an upper arm switch (SWH) of an inverter (20), a low-potential side path (22L) that electrically connects a negative electrode terminal of a second electrical storage unit (32) and a low-potential side terminal of a lower arm switch (SWL), a connection path (73), a neutral point capacitor (74, 75), a parameter detection unit (85, 84, 84A, 84B, 88, 89A, 89B) that detects an electrical parameter of the neutral point capacitor or the connection path, and a control unit (100, 90, 110, 130). When performing switching control of the inverter to supply current to the connection path, the control unit determines whether an electrical disconnection abnormality has occurred on the connection path, based on a detection value of the parameter detection unit.

## Description

### [Cross-Reference to Related Application]

The present application is based on Japanese Patent Application No. 2023-092246 filed on June 5, 2023, the description of which is incorporated herein by reference.

### [Technical Field]

The present disclosure relates to a power conversion device and a program.

### [Background Art]

Conventionally, power conversion devices including a motor, an inverter, a storage battery, and a control unit have been known. It is noted that as an example of such a power conversion device, PTL 1 describes a related technique.

### [Citation List]

### [Patent Literature]

[PTL 1] JP 2011-18532 A

### [Summary of the Invention]

A technique is desired which can accurately determine occurrence of an abnormality in the power conversion device.

The present disclosure has a main object of providing a power conversion device and a program that can accurately determine occurrence of an abnormality.

A power conversion device according to the present disclosure includes:
an inverter that has an upper arm switch and a lower arm switch; and
a motor that has an armature winding electrically connected to a low-potential side terminal of the upper arm switch and a high-potential side terminal of the lower arm switch, the power conversion device including:
   a high-potential side path that electrically connects a positive electrode terminal of a first electrical storage unit and a high-potential side terminal of the upper arm switch;
   a low-potential side path that electrically connects a negative electrode terminal of a second electrical storage unit and a low-potential side terminal of the lower arm switch;
   a connection path that electrically connects a negative electrode terminal of the first electrical storage unit or a positive electrode terminal of the second electrical storage unit, and the armature winding;
   a neutral point capacitor connected to the connection path;
   a parameter detection unit that detects an electrical parameter of the neutral point capacitor or the connection path; and
   a control unit, wherein
   when performing switching control of the inverter to supply current to the connection path, the control unit performs determination processing that determines whether an electrical disconnection abnormality has occurred on the connection path, based on a detection value of the parameter detection unit.

The power conversion device of the present disclosure performs switching control of the inverter to supply current to the connection path. During the switching control, if an electrical disconnection abnormality occurs on the connection path, a voltage between the terminals of the neutral point capacitor becomes excessively high, whereby the neutral point capacitor may fail.

Herein, when current is being supplied to the connection path, electrical parameters of the neutral point capacitor or the connection path exhibit different behaviors depending on whether an electrical disconnection abnormality has occurred on the connection path. When current is being supplied to the connection path by switching control, the control unit of the present disclosure can accurately determine whether the electrical disconnection abnormality has occurred, based on a detection value of the parameter detection unit that detects an electrical parameter on the connection path.

### [Brief Description of the Drawings]

The above-mentioned and other objects, features and advantages of the present disclosure will become more apparent by reference to the following detailed description taken in conjunction with the accompanying drawings, in which
[FIG. 1] FIG. 1 is a drawing illustrating an overall configuration of a system according to a first embodiment;
[FIG. 2] FIG. 2 is a drawing illustrating control states of switches when high-voltage charging is performed;
[FIG. 3] FIG. 3 is a drawing illustrating control states of the switch when low-voltage charging is performed;
[FIG. 4] FIG. 4 is a flowchart illustrating a procedure of an external charging control process;
[FIG. 5] FIG. 5 is a flowchart illustrating a procedure of a charging preparation process;
[FIG. 6] FIG. 6 is a flowchart illustrating a procedure of a charging stop process;
[FIG. 7] FIG. 7 is a flowchart illustrating a procedure of a fail-safe process;
[FIG. 8] FIG. 8 is a drawing illustrating control states of switches when equalization control according to a second embodiment is performed;
[FIG. 9] FIG. 9 is a flowchart illustrating a procedure of an equalization control process;
[FIG. 10] FIG. 10 is a flowchart illustrating a procedure of an equalization preparation process;
[FIG. 11] FIG. 11 is a flowchart illustrating a procedure of an equalization stop process;
[FIG. 12] FIG. 12 is a flowchart illustrating a procedure of a fail-safe process;
[FIG. 13] FIG. 13 is a drawing illustrating control states of switches when high-voltage power supply is performed according to a third embodiment;
[FIG. 14] FIG. 14 is a drawing illustrating control states of the switches when low-voltage power supply is performed;
[FIG. 15] FIG. 15 is a flowchart illustrating a procedure of an external charging control process according to a fourth embodiment;
[FIG. 16] FIG. 16 is a drawing illustrating an overall configuration of a system according to a modification of the fourth embodiment;
[FIG. 17] FIG. 17 is a drawing illustrating an overall configuration of a system according to a fifth embodiment;
[FIG. 18] FIG. 18 is a drawing illustrating an overall configuration of a system according to a sixth embodiment;
[FIG. 19] FIG. 19 is a drawing illustrating an overall configuration of a system according to a modification of the sixth embodiment;
[FIG. 20] FIG. 20 is a drawing illustrating an overall configuration of a system according to a seventh embodiment;
[FIG. 21] FIG. 21 is a drawing illustrating control states of switches when high-voltage charging is performed;
[FIG. 22] FIG. 22 is a drawing illustrating control states of the switches when low-voltage charging is performed;
[FIG. 23] FIG. 23 is a drawing illustrating control states of the switches when equalization control is performed;
[FIG. 24] FIG. 24 is a drawing illustrating control states of switches when high-voltage power supply is performed;
[FIG. 25] FIG. 25 is a drawing illustrating control states of the switches when low-voltage power supply is performed;
[FIG. 26] FIG. 26 is a drawing illustrating an overall configuration of a system according to another embodiment;
[FIG. 27] FIG. 27 is a drawing illustrating an overall configuration of a system according to another embodiment; and
[FIG. 28] FIG. 28 is a drawing illustrating an overall configuration of a system according to another embodiment.

### [Description of the Embodiments]

With reference to the drawings, a plurality of embodiments will be described. In the plurality of embodiments, parts functionally and/or structurally corresponding to each other and/or parts associated with each other may be denoted by the same reference sign or reference signs whose hundreds or higher digits are different from each other. Regarding the corresponding parts and/or the associated parts, descriptions of other embodiments can be referred to.

### <First embodiment>

Hereinafter, a first embodiment embodying a power conversion device according to the present disclosure will be described with reference to the drawings. The power conversion device of the present embodiment is mounted to a vehicle such as an electric vehicle or a hybrid vehicle and configures an in-vehicle system.

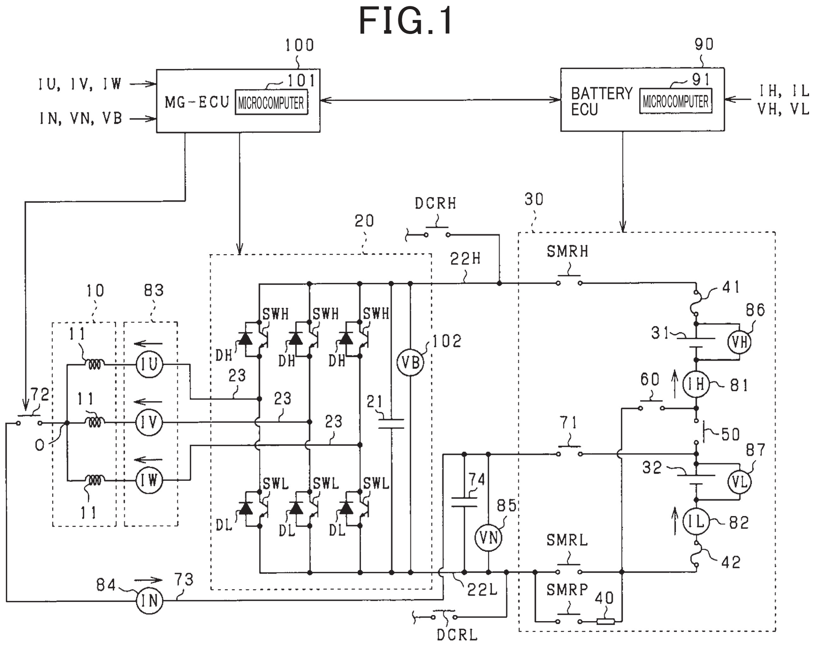

As illustrated in FIG. 1, the power conversion device includes a motor 10, an inverter 20, a high-potential side path 22H and a low-potential side path 22L. The motor 10 is a three-phase synchronous machine and includes star-connection U, V, W-phase armature windings 11, and a rotor, which is not shown. The armature windings 11 of the respective phases are disposed in a state of being displaced from each other by an electrical angle of 120° The motor 10 is, for example, a permanent magnet synchronous machine. The rotor can transfer power to drive wheels of the vehicle. Hence, the motor 10 serves as a source generating torque for propelling the vehicle.

The inverter 20 includes series connections of an upper arm switch SWH and a lower arm switch SWL for the three phases. The upper arm switch SWH is connected with an upper arm diode DH, which is a free wheel diode, in antiparallel. The lower arm switch SWL is connected with a lower arm diode DL, which is a free wheel diode, in antiparallel. In the present embodiment, the switches SWH, SWL are IGBTs.

The inverter 20 includes a smoothing capacitor 21. The high-potential side terminal of the smoothing capacitor 21 is connected with a long high-potential side path 22H. The low-potential side terminal of the smoothing capacitor 21 is connected with a long low-potential side path 22L. The high-potential side path 22H and the low-potential side path 22L are, for example, electric paths such as a bus bar. It is noted that the smoothing capacitor 21 may be provided outside the inverter 20.

In each of the phases, the connection point of the emitter of the upper arm switch SWH, which is a low-potential side terminal, and the collector of the lower arm switch SWL, which is a high-potential side terminal, is connected with a first terminal of the armature winding 11 via a conductive member 23 such as a bus bar. Second terminals of the armature windings 11 of the respective phases are connected at a neutral point O. It is noted that, in the present embodiment, the numbers of turns of the armature windings 11 of the respective phases are set to be the same. Hence, for example, inductances of the armature windings 11 of the respective phases are set to be the same.

The collectors of the upper arm switches SWH of the respective phases are connected with the high-potential side path 22H. The emitters of the lower arm switches SWL of the respective phases are connected with the low-potential side path 22L.

The system includes a first storage battery 31 (corresponding to a first electrical storage unit) and a second storage battery 32 (corresponding to a second electrical storage unit). The storage batteries 31, 32 serve as power supply sources for rotationally driving the rotor of the motor 10. Each of the storage batteries 31, 32 is an assembled battery including a series connection of a plurality of unit cells. The unit cell is one battery cell, which is a single cell, or a series connection of a plurality of battery cells. In the present embodiment, full charge capacities (specifically, e.g., rated full charge capacities) [Ah] of the respective unit cells configuring the first storage battery 31 and the second storage battery 32 are the same. The positive electrode terminal of the first storage battery 31 is connected to the high-potential side path 22H via a first fuse 41. The negative electrode terminal of the second storage battery 31 is connected to the low-potential side path 22L via a second fuse 42. For example, terminal voltages (e.g., rated voltages) of the respective battery cells configuring the assembled battery are set to be the same. For example, the battery cell is a secondary cell such as a lithium-ion cell. In the present embodiment, a voltage between the terminals (e.g., a rated voltage) of the first storage battery 31 is higher than a voltage between the terminals (e.g., a rated voltage) of the second storage battery 32. For example, this configuration can be achieved by making the number of the unit cells configuring the first storage battery 31 higher than the number of the unit cells configuring the second storage battery 32.

The power conversion device includes main switches for electrically connecting or disconnecting the first and second storage batteries 31, 32 and the inverter 20. Specifically, as the main switches, a high-potential side main switch SMRH, a low-potential side main switch SMRL, and a precharge main switch SMRP are provided. In the present embodiment, the main switches SMRH, SMRL, SMRP are mechanical relays. If turned off, the main switches SMRH, SMRL, SMRP prevent currents from flowing bidirectionally. If turned on, the main switches SMRH, SMRL, SMRP permit currents to flow bidirectionally. The high-potential side main switch SMRH is provided to the high-potential side path 22H. The low-potential side main switch SMRL is provided to the low-potential side path 22L. The low-potential side main switch SMRL is connected with a series connection of the precharge main switch SMRP and a precharge resistor 40 in parallel. It is noted that the main switches SMRH, SMRL, SMRP are not limited to mechanical relays but may be, for example, semiconductor switching elements.

The storage batteries 31, 32 can be charged from an external charger provided outside the vehicle by external charge control. The external charger is, for example, a stationary charger.

The storage batteries 31, 32 can supply electric power to a power supply target unit outside the vehicle by external power supply control. The external power supply control performed when the power supply target unit is a system power supply is also referred to as V2G (Vehicle to Grid). In addition, the external power supply control performed when the power supply target unit is electrical equipment of a building such as a home is referred to as V2H (Vehicle to Home).

The power conversion device includes a high-potential side connection switch DCRH and a low-potential side connection switch DCRL for electrically connecting or disconnecting the external charger or the power supply target unit and the first and second storage batteries 31, 32. In the present embodiment, the connection switches DCRH, DCRL are mechanical relays. If turned off, the connection switches DCRH, DCRL prevent currents from flowing bidirectionally. If turned on, the connection switches DCRH, DCRL permit currents to flow bidirectionally. The high-potential side connection switch DCRH is provided to a portion of the high-potential side path 22H closer to the inverter 20 than the high-potential side main switch SMRH is. The low-potential side connection switch DCRL is provided to a portion of the low-potential side path 22L closer to the inverter 20 than the low-potential side main switch SMRL is. It is noted that the connection switches DCRH, DCRL are not limited to mechanical relays but may be, for example, semiconductor switching elements.

The power conversion device includes, as components for changing connection states of the first storage battery 31 and the second storage battery 32, an inter-battery switch 50 (corresponding to an inter-electrical storage unit switch), a bypass switch 60, a first motor side switch 71, a second motor side switch 72, and a connection path 73. In the present embodiment, the inter-battery switch 50, the bypass switch 60, and the motor side switches 71, 72 are mechanical relays. If turned off, the inter-battery switch 50, the bypass switch 60, and the motor side switches 71, 72 prevent currents from flowing bidirectionally. If turned on, the inter-battery switch 50, the bypass switch 60, and the motor side switches 71, 72 permit currents to flow bidirectionally. It is noted that the inter-battery switch 50, the bypass switch 60, and the motor side switches 71, 72 are not limited to mechanical relays but may be, for example, semiconductor switching elements.

The inter-battery switch 50 connects the negative electrode terminal of the first storage battery 31 and the positive electrode terminal of the second storage battery 32. If the inter-battery switch 50 is turned on, the negative electrode terminal of the first storage battery 31 and the positive electrode terminal of the second storage battery 32 are electrically connected. In contrast, if the inter-battery switch 50 is turned off, the negative electrode terminal of the first storage battery 31 and the positive electrode terminal of the second storage battery 32 are electrically disconnected.

The bypass switch 60 connects the negative electrode terminal of the first storage battery 31 and the low-potential side path 22L. If the bypass switch 60 is turned on, the negative electrode terminal of the first storage battery 31 and the negative electrode terminal of the second storage battery 32 are electrically connected. In contrast, if the bypass switch 60 is turned off, the negative electrode terminal of the first storage battery 31 and the negative electrode terminal of the second storage battery 32 are electrically disconnected.

It is noted that, in the present embodiment, the first storage battery 31 and the second storage battery 32 configure a battery unit 30.

The connection path 73 is an electric path connecting the positive electrode terminal of the second storage battery 32 and neutral point O. The connection path 73 is provided with the first motor side switch 71 and the second motor side switch 72 in this order from the second storage battery 32.

The power conversion device includes a neutral point capacitor 74, which is a capacitor connecting the connection path 73 and the low-potential side path 22L. A first terminal of the neutral point capacitor 74 is connected to a portion of the connection path 73 between the first motor side switch 71 and the second motor side switch 72. A second terminal of the neutral point capacitor 74 is connected to a portion of the low-potential side path 22L closer to the inverter 20 than the low-potential side main switch SMRL and the precharge main switch SMRP are.

If the first motor side switch 71 is turned on, the first terminal of the neutral point capacitor 74 and the positive electrode terminal of the second storage battery 32 are electrically connected. In contrast, if the first motor side switch 71 is turned off, the first terminal of the neutral point capacitor 74 and the positive electrode terminal of the second storage battery 32 are electrically disconnected. If the second motor side switch 72 is turned on, the neutral point O of the armature windings 11 and the first terminal of the neutral point capacitor 74 are electrically connected. In contrast, if the second motor side switch 72 is turned off, the neutral point O and the first terminal of the neutral point capacitor 74 are electrically disconnected.

The power conversion device includes, as current sensors detecting currents flowing through parts thereof, a first current sensor 81, a second current sensor 82, a phase current sensor 83, and a motor current sensor 84. The first current sensor 81 detects a current flowing to the first storage battery 31. The second current sensor 82 detects a current flowing to the second storage battery 32. The phase current sensor 83 detects a current flowing to the armature windings 11. The motor current sensor 84 detects a current flowing through a portion of the connection path 73 closer to the neutral point O than the connection point with the neutral point capacitor 74 is.

The power conversion device includes a first voltage sensor 86 detecting a voltage between the terminals of the first storage battery 31, a second voltage sensor 87 detecting a voltage between the terminals of the second storage battery 32, a capacitor voltage sensor 85 (corresponding to a parameter detection unit) detecting a voltage between the terminals of the neutral point capacitor 74, and a power supply voltage sensor 102 detecting a voltage between the terminals of the smoothing capacitor 21. It is noted that the power conversion device includes another sensor, a rotation angle sensor, which is not shown, detecting a rotation angle (electrical angle) of the rotor.

The system includes a battery ECU 90 that controls the battery unit 30 and a motor ECU 100 that controls the inverter 20. The battery ECU 90 is an electronic control unit mainly configured by a microcomputer 91. The motor ECU 100 is an electronic control unit mainly configured by a microcomputer 101. The battery ECU 90 and the motor ECU 100 can transmit/receive information to/from each other through a communication unit such as CAN communication.

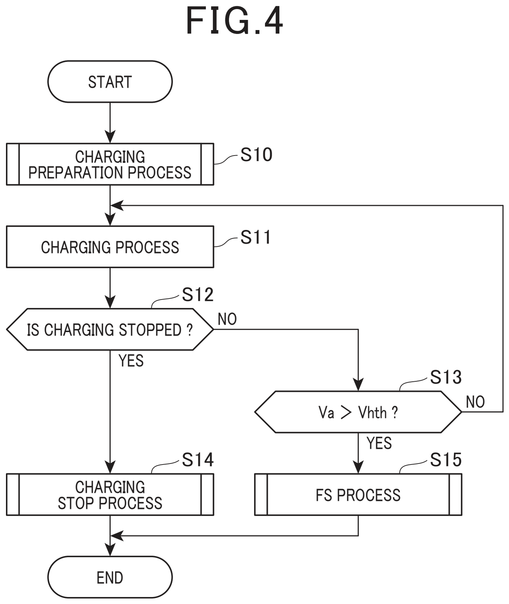

Each of the microcomputers 91, 101 includes a CPU (Central Processing Unit). Functions provided by the microcomputers 91, 101 can be implemented by software stored in a tangible memory device and a computer executing the software, only software, only hardware, or a combination thereof. For example, if implemented by electronic circuits, which are hardware, the microcomputers 91, 101 can be implemented by digital circuits including a number of logic circuits or analog circuits. For example, the microcomputers 91, 101 execute programs stored in non-transitory tangible storage mediums serving as storage units included therein. The programs include, for example, a program of a process illustrated in FIGs. 4 to 7 and the like described later. When a set of instructions configuring the program is executed, a method corresponding to the program is performed. The storage units are, for example, non-volatile memories. It is noted that the programs stored in the storage units can be updated, for example, through a communication network such as OTA (Over The Air) and the Internet.

To the battery ECU 90, detection values of the first current sensor 81, the second current sensor 82, the first voltage sensor 86, and the second voltage sensor 87 are input. To the motor ECU 100, detection values of the phase current sensor 83, the motor current sensor 84, the capacitor voltage sensor 85, the power supply voltage sensor 102, and the rotation angle sensor are input.

The motor ECU 100 performs switching control of the switches SWH, SWL configuring the inverter 20 based on the detection values of the sensors, in order to feed back a controlled variable of the motor 10 to a command value. The controlled variable is, for example, torque. In each of the phases, the upper arm switch SWH and the lower arm switch SWL are alternately turned on. Hence, the upper arm switch SWH and the lower arm switch SWL alternately enter on states, and rotative power of the rotor of the motor 10 is transferred to the drive wheels, whereby the vehicle travels.

It is noted that if determining that a detection voltage of the power supply voltage sensor 102 has exceeded a determination voltage, the motor ECU 100 determines that an overvoltage abnormality of the inverter 20 has occurred, and performs an overvoltage stop process that stops the switching control of the inverter 20.

The main switches SMRH, SMRL, SMRP, the connection switches DCRH, DCRL, the inter-battery switch 50, the bypass switch 60, and the motor side switches 71, 72 may be controlled by either of the battery ECU 90 or the motor ECU 100. In the present embodiment, the main switches SMRH, SMRL, SMRP, the inter-battery switch 50, the bypass switch 60, and the first motor side switch 71 are controlled by the battery ECU 90, and the connection switches DCRH, DCRL and the second motor side switch 72 are controlled by the motor ECU 100.

Next, the external charge control will be described.

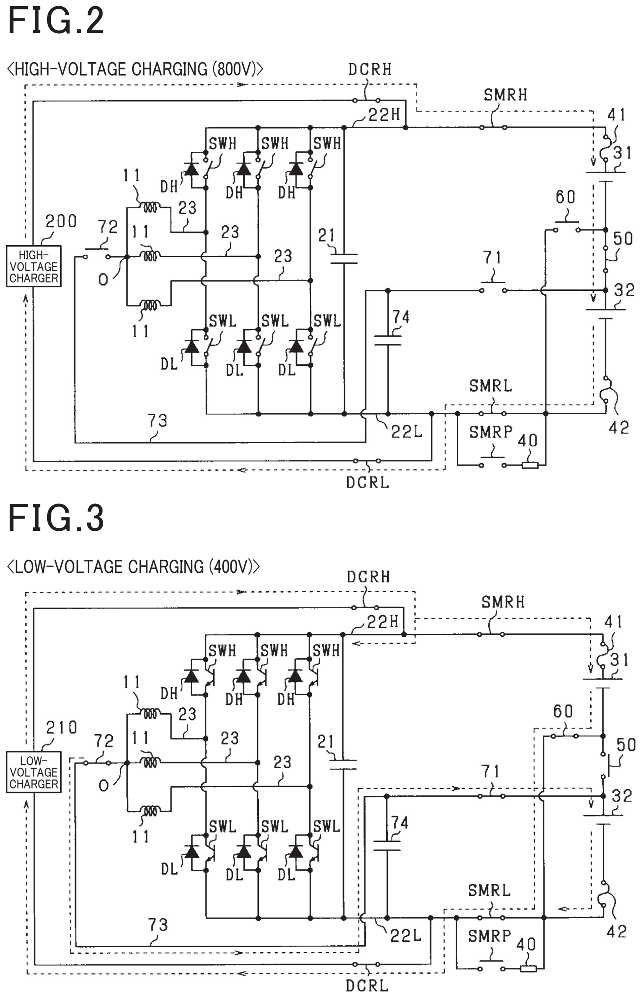

In the present embodiment, as illustrated in FIG. 2 and FIG. 3, the external charger is a high-voltage charger 200 or a low-voltage charger 210. Charging voltage of the high-voltage charger 200 is higher than a voltage between the terminals (specifically, a rated voltage) of the series connection of the first and second storage batteries 31, 32, for example, 800 V. Charging voltage of the low-voltage charger 210 is lower than a voltage between the terminals of the series connection of the first and second storage batteries 31, 32 and is higher than a voltage between the terminals (specifically, a rated voltage) of the first storage battery 32, for example, 400 V. When the first and second storage batteries 31, 32 are charged by the external charger, the high-potential side connection switch DCRH and the low-potential side connection switch DCRL are changed to on states. In contrast, when charging by the external charger is not performed or when the external charger is not connected to the power conversion device, the high-potential side connection switch DCRH and the low-potential side connection switch DCRL are changed to off states.

FIG. 2 illustrates control states of the switches when the external charge control using the high-voltage charger 200 is performed. If determining that an external charger connected to the power conversion device is the high-voltage charger 200, the motor ECU 100 turns off the second motor side switch 72 and the upper and lower arm switches SWH, SWL for all the phases of the inverter 20. In addition, if determining that the external charger connected to the power conversion device is the high-voltage charger 200, the battery ECU 90 turns on the high-potential side main switch SMRH, the low-potential side main switch SMRL, and the inter-battery switch 50, and turns off the precharge main switch SMRP, the bypass switch 60, and the first motor side switch 71. Hence, the first storage battery 31 and the second storage battery 32 are connected to the high-voltage charger 200 in series. Hence, current flows through a closed circuit including the high-voltage charger 200, the high-potential side path 22H, the first storage battery 31, the inter-battery switch 50, the second storage battery 32, and the low-potential side path 22L, whereby the first storage battery 31 and the second storage battery 32 are charged in a state in which they are connected in series. In this case, since the upper arm switch SWH of the inverter 20 and the second motor side switch 72 have been turned off, charging current of the high-voltage charger 200 can avoid flowing through the inverter 20 and the armature windings 11.

FIG. 3 illustrates control states of the switches when the external charge control using the low-voltage charger 210 is performed. If determining that an external charger connected to the power conversion device is the low-voltage charger 210, the motor ECU 100 turns on the second motor side switch 72. If determining that the external charger connected to the power conversion device is the low-voltage charger 210, the battery ECU 90 turns on the high-potential side main switch SMRH, the low-potential side main switch SMRL, the bypass switch 60, and the first motor side switch 71, and turns off the precharge main switch SMRP and the inter-battery switch 50. Hence, current flows through a closed circuit including the low-voltage charger 210, the high-potential side path 22H, the first storage battery 31, the bypass switch 60, and the low-potential side path 22L, whereby the first storage battery 31 is charged.

In the external charge control by the low-voltage charger 210, the motor ECU 100 performs switching control that alternately turns on at least the upper and lower arm switches SWH, SWL for one phase, or performs switching control of at least the upper arm switch SWH for one phase in a state in which the lower arm switches SWL for all the phases of the inverter 20 are turned off, whereby output voltage of the low-voltage charger 210 is decreased and is supplied to the second storage battery 32. Specifically, the motor ECU 100 performs the above switching control in order to control a voltage detected by the capacitor voltage sensor 85 (hereinafter, a neutral point capacitor voltage VN) to a target charging voltage. Hence, current flows through a closed circuit including the low-voltage charger 210, the high-potential side path 22H, the upper arm switches SWH of the inverter 20, the armature windings 11, the neutral point O, the second motor side switch 72, the first motor side switch 71, the second storage battery 32, and the low-potential side path 22L, whereby the second storage battery 32 is charged. Since a voltage between the terminals of the second storage battery 32 is lower than a voltage between the terminals of the first storage battery 31, a target charging voltage of the second storage battery 32 is lower than a target charging voltage of the first storage battery 31.

Incidentally, while the external charge control is performed, an electrical disconnection abnormality may occur at a portion of the connection path 73 closer to the second storage battery 32 than the connection point with the neutral point capacitor 74 is. The disconnection abnormality includes, for example, the following abnormalities (A) to (C).
(A) An abnormality in which when the first motor side switch 71 is normal, an off state is maintained though the first motor side switch 71 is controlled to be turned on. This abnormality occurs, for example, when an abnormality occurs in a signal path from battery ECU 90 to the first motor side switch 71.
(B) An open failure of the first motor side switch 71.
(C) A disconnection failure of a wiring configuring the connection path 73.

While the external charge control is performed, if the disconnection failure occurs, a voltage between the terminals of the neutral point capacitor 74 becomes excessively high, whereby the neutral point capacitor 74 may fail. For example, if a short circuit failure occurs as a failure of the neutral point capacitor 74, an overcurrent flows to inverter 20 before a detection voltage of the power supply voltage sensor 102 exceeds the determination voltage in the overvoltage stop process described above, whereby a failure of the inverter 20 may occur. Hence, in the present embodiment, a fail-safe process is performed which detects a disconnection abnormality to suppress occurrence of the problems described above.

FIG. 4 illustrates a procedure of the external charging control process, which includes the fail-safe process, performed by the low-voltage charger 210. This process is performed in cooperation with the motor ECU 100 and the battery ECU 90. It is noted that, in the present embodiment, before the external charging control is started, the switches DCRH, DCRL, SMRH, SMRL, SMRP, 50, 60, 71, 72 have been turned off.

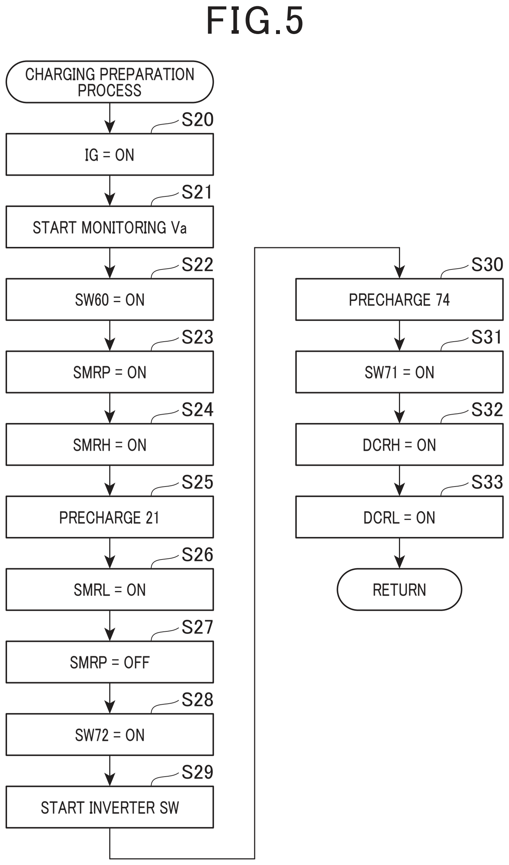

In step S10, the motor ECU 100 and the battery ECU 90 perform a charging preparation process. FIG. 5 is a flowchart illustrating a procedure of the charging preparation process.

In step S20, the motor ECU 100 and the battery ECU 90 determines that the starting switch (e.g., an ignition) of the vehicle has been turned on by the user. Then, in step S21, the motor ECU 100 starts monitoring a voltage change rate Va, which is a change rate of the neutral point capacitor voltage VN. The motor ECU 100 starts processing that calculates the voltage change rate Va based on the neutral point capacitor voltage VN at every control period. For example, the voltage change rate Va may be calculated by dividing a value obtained by subtracting the neutral point capacitor voltage VN at one control period before from the neutral point capacitor voltage VN at a current control period, by the length of one control period. Alternatively, for example, the neutral point capacitor voltage VN may be input to a differentiating circuit, and an output value of the differentiating circuit may be used as the voltage change rate Va.

In step S22, the battery ECU 90 turns on the bypass switch 60. The battery ECU 90 turns on the precharge main switch SMRP in succeeding step S23 and turns on the high-potential side main switch SMRH in succeeding step S24. Hence, in step S25, the smoothing capacitor 21 is precharged by first storage battery 31, whereby the voltage between the terminals of the smoothing capacitor 21 increases to a voltage equivalent to the voltage between the terminals of the first storage battery 31.

If the precharge process is completed, the battery ECU 90 turns on the low-potential side main switch SMRL in step S26 and turns off the precharge main switch SMRP in succeeding step S27.

In step S28, the motor ECU 100 turns on the second motor side switch 72.

In step S29, in order to precharge the neutral point capacitor 74, the motor ECU 100 starts switching control that alternately turns on at least the upper and lower arm switches SWH, SWL for one phase or switching control of at least the upper arm switch SWH for one phase in a state in which the lower arm switches SWL for all the phases are turned off. Hence, in step S30, the neutral point capacitor 74 is precharged by the first storage battery 31, whereby the voltage between the terminals of the neutral point capacitor 74 increases to a voltage equivalent to the voltage between the terminals of the second storage battery 32. It is noted that, in the precharge process of the neutral point capacitor 74, for example, the motor ECU 100 may perform switching control of the inverter 20 in order to control the neutral point capacitor voltage VN to a second detection voltage VL, which is a detection voltage of the second voltage sensor 87.

If the precharge process is completed, the battery ECU 90 turns on the first motor side switch 71 in step S31, turns on the high-potential side connection switch DCRH in succeeding step S32, and turns on the low-potential side connection switch DCRL in succeeding step S33. Hence, the charging preparation process is completed.

Returning to the above description of FIG. 4, in step S11, the motor ECU 100 performs switching control of the inverter 20 to perform a charging process that decreases output voltage of the low-voltage charger 210 and supplies the output voltage to the second storage battery 32. In this case, the motor ECU 100 transmits a command output current for the low-voltage charger 210 to the low-voltage charger 210, based on the magnitude of charging current to be supplied from the low-voltage charger 210 to the first storage battery 31 and the magnitude of charging current to be supplied from the low-voltage charger 210 to the second storage battery 32 through the inverter 20 and the connection path 73.

In step S12, the motor ECU 100 determines whether a stop instruction of the charging process is provided.

If determining that no stop instruction has been provided in step S12, the motor ECU 100 proceeds to step S13, in which the motor ECU 100 determines whether the calculated voltage change rate Va has exceeded a voltage threshold value Vhth. If determining that the voltage change rate Va is the voltage threshold value Vhth or lower, the motor ECU 100 determines that no disconnection abnormality has occurred and proceeds to step S11 to continue the charging process. In contrast, if determining that the voltage change rate Va has exceeded the voltage threshold value Vhth, the motor ECU 100 determines that a disconnection abnormality has occurred and performs a fail-safe process in step S15 described later.

If a disconnection abnormality occurs while the external charging control is performed, the rate of a rise in the voltage between the terminals of the neutral point capacitor 74 rapidly increases. Hence, the disconnection abnormality can be detected more promptly from the rate of a rise in the voltage between the terminals of the neutral point capacitor 74 than from the voltage between the terminals of the neutral point capacitor 74.

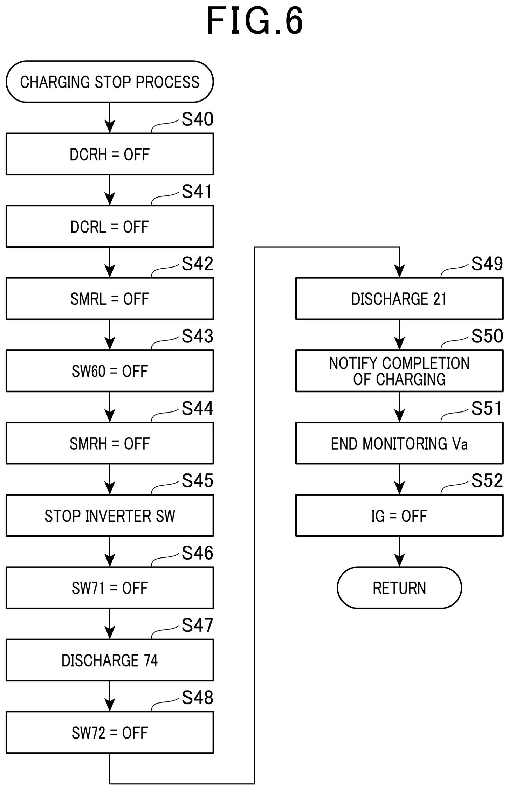

If determining that a stop instruction has been provided in step S12, the motor ECU 100 proceeds to step S14, in which the motor ECU 100 performs a charging stop process. FIG. 6 is a flowchart illustrating a procedure of the charging stop process.

The motor ECU 100 turns off the high-potential side connection switch DCRH in step S40, and turns off the low-potential side connection switch DCRL in succeeding step S41.

The battery ECU 90 turns off the low-potential side main switch SMRL in step S42, turns off the bypass switch 60 in succeeding step S43, and turns off the high-potential side main switch SMRH in succeeding step S44.

In step S45, the motor ECU 100 stops the switching control of the inverter 20 for the charging process. In step S46, the battery ECU 90 turns off the first motor side switch 71.

In step S47, the motor ECU 100 performs switching control of at least the lower arm switch SWL for one phase to discharge the neutral point capacitor 74. Hence, the voltage between the terminals of the neutral point capacitor 74 lowers to 0. If the discharge process is completed, the motor ECU 100 turns off the second motor side switch 72 in step S47.

In step S49, the motor ECU 100 performs switching control of the inverter 20 to discharge the smoothing capacitor 21. Hence, the voltage between the terminals of the smoothing capacitor 21 lowers to 0. If the discharge process is completed, the motor ECU 100 stops the switching control of the inverter 20, and, in step S50, performs a process that informs a host control unit, which is not shown, of the completion of the charging process.

The motor ECU 100 ends monitoring the voltage change rate Va in step S51 and determines that the starting switch has been turned off in step S52.

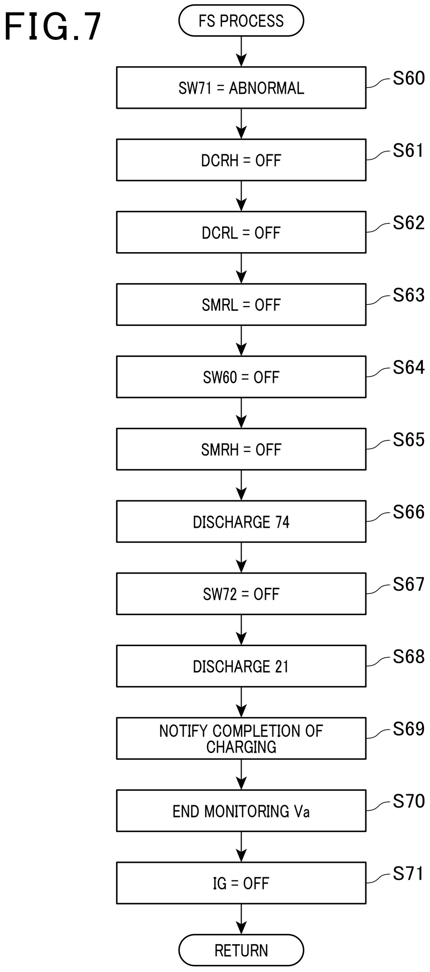

FIG. 7 is a flowchart illustrating a procedure of the fail-safe process.

In step S60, the motor ECU 100 determines that a disconnection abnormality has occurred. In the present embodiment, the motor ECU 100 determines that, as the disconnection abnormality, an abnormality in which the first motor side switch 71 is turned off has occurred. In addition, the motor ECU 100 stops the switching control of the inverter 20 in the charging process, and instructs the low-voltage charger 210 to stop output of charging current from the low-voltage charger 210.

The motor ECU 100 turns off the high-potential side connection switch DCRH in step S61, and turns off the low-potential side connection switch DCRL in succeeding step S62.

The battery ECU 90 turns off the low-potential side main switch SMRL in step S63, turns off the bypass switch 60 in succeeding step S64, and turns off the high-potential side main switch SMRH in succeeding step S65.

In step S66, as in the processing of step S47, the motor ECU 100 performs switching control of at least the lower arm switch SWL for one phase to discharge the neutral point capacitor 74. Hence, the voltage between the terminals of the neutral point capacitor 74 lowers to 0. If the discharge process is completed, the motor ECU 100 turns off the second motor side switch 72 in step S67.

In step S68, as in the processing of step S49, the motor ECU 100 performs switching control of the inverter 20 to discharge the smoothing capacitor 21. Hence, the voltage between the terminals of the smoothing capacitor 21 lowers to 0. If the discharge process is completed, the motor ECU 100 stops the switching control of the inverter 20. In step S69, the motor ECU 100 performs a process that informs the host control unit of the completion of the charging process due the occurrence of an abnormality.

The motor ECU 100 ends monitoring the voltage change rate Va in step S70 and determines that the starting switch has been turned off in step S71.

Before the discharge of the smoothing capacitor 21, the main switches SMRH, SMRL are turned off. Hence, in a state in which the first and second storage batteries 31, 32 side and the inverter 20 side are electrically disconnected, the discharge of the smoothing capacitor 21 can be safely performed.

Before the discharge of the smoothing capacitor 21, the connection switches DCRH, DCRL are turned off. Hence, in a state in which the inverter 20 side and the low-voltage charger 210 side are electrically disconnected, the discharge of the smoothing capacitor 21 can be safely performed.

According to the present embodiment described above, occurrence of a disconnection abnormality can be accurately determined, whereby the processing can proceed to the fail-safe process.

### <Modifications of first embodiment>

· Even when an abnormality has occurred in a function of detecting a disconnection abnormality, the switching control of the inverter 20 can be stopped by the overvoltage stop process described above.
· In step S13 in FIG. 4, the motor ECU 100 may use the neutral point capacitor voltage VN instead of the voltage change rate Va. Specifically, if determining that the neutral point capacitor voltage VN is a determination threshold value or lower, the motor ECU 100 proceeds to step S11. If determining that the neutral point capacitor voltage VN is higher than the determination threshold value, the motor ECU 100 proceeds to step S15.

### <Second embodiment>

Hereinafter, a second embodiment will be described focusing on differences from the first embodiment with reference to the drawings. In the present embodiment, the motor ECU 100 performs switching control of the inverter 20 to perform equalization control that transfers electric power from one of the first storage battery 31 and the second storage battery 32 to the other thereof. The equalization control can equalize SOC of the unit cells configuring the first storage battery 31 and SOC of the unit cells configuring the second storage battery 32.

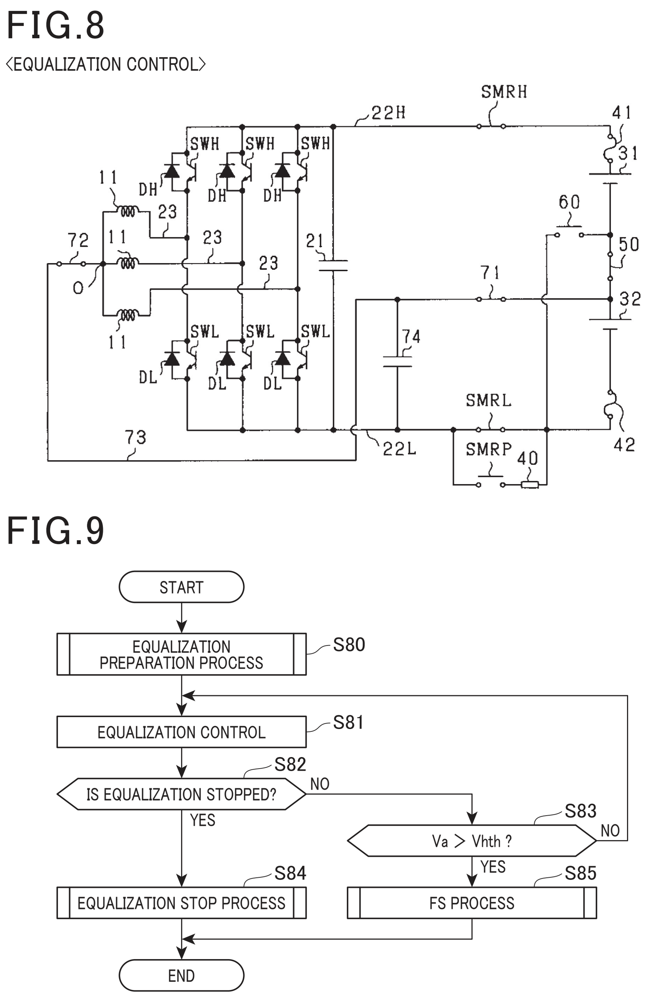

FIG. 8 illustrates control states of the switches when the equalization control is performed. It is noted that when the equalization control is performed, the connection switches DCRH, DCRL are turned off.

The battery ECU 90 turns on the high-potential side main switch SMRH, the low-potential side main switch SMRL, the inter-battery switch 50, and the first motor side switch 71, and turns off the precharge main switch SMRP and the bypass switch 60. The motor ECU 100 turns on the second motor side switch 72 and performs switching control of the inverter 20 for at least one phase, in order to transfer electric power from one of the first storage battery 31 and the second storage battery 32 to the other thereof.

Specifically, the motor ECU 100 performs first control that performs switching control of at least the upper arm switch SWH for one phase to supply current from the first storage battery 31 to the second storage battery 32 through the inverter 20, the armature windings 11, and the connection path 73. In addition, the motor ECU 100 performs second control that performs switching control of at least the lower arm switch SWL for one phase to supply current through the second storage battery 32, the connection path 73, the armature windings 11, and the inverter 20.

Incidentally, while the first control is performed, an electrical disconnection abnormality may occur at the portion of the connection path 73 closer to the second storage battery 32 than the connection point with the neutral point capacitor 74 is. The disconnection abnormality includes the abnormalities (A) to (C) described above.

In contrast, while the second control is performed, an electrical disconnection abnormality may occur at a portion of the connection path 73 closer to the armature windings 11 than the connection point with the neutral point capacitor 74 is. The disconnection abnormality includes the following abnormalities (D) to (F).

(D) An abnormality in which when the second motor side switch 72 is normal, an off state is maintained though the second motor side switch 72 is controlled to be turned on. This abnormality occurs, for example, when an abnormality occurs in a signal path from battery ECU 90 to the second motor side switch 72.

(E) An open failure of the second motor side switch 72.

(F) A disconnection failure of the wiring configuring the connection path 73.

While the equalization control is performed, if the disconnection failure occurs, a voltage between the terminals of the neutral point capacitor 74 becomes excessively high, whereby the neutral point capacitor 74 may fail. Hence, in the present embodiment, a fail-safe process is performed which detects a disconnection abnormality to suppress occurrence of the problems described above.

FIG. 9 illustrates a procedure of the equalization control process including the fail-safe process. This process is performed in cooperation with the motor ECU 100 and the battery ECU 90. It is noted that, in the present embodiment, before the equalization control starts, the switches DCRH, DCRL, SMRH, SMRL, SMRP, 50, 60, 71, 72 have been turned off.

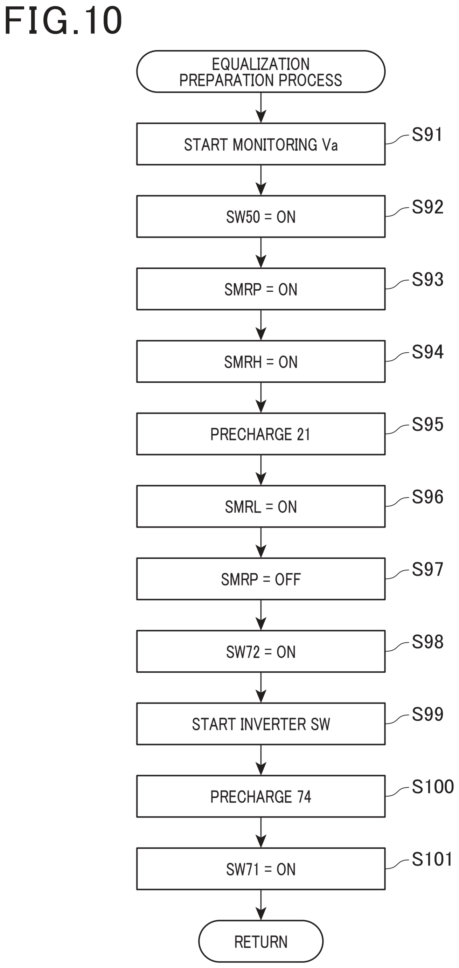

In step S80, the motor ECU 100 and the battery ECU 90 perform an equalization preparation process. FIG. 10 is a flowchart illustrating a procedure of the equalization preparation process.

In step S91, as in the processing of step S21, the motor ECU 100 starts processing that calculates the voltage change rate Va based on the neutral point capacitor voltage VN at every control period.

In step S92, the battery ECU 90 turns on the inter-battery switch 50. The battery ECU 90 turns on the precharge main switch SMRP in succeeding step S93 and turns on the high-potential side main switch SMRH in succeeding step S94. Hence, in step S95, the smoothing capacitor 21 is precharged by the series connection of the first and second storage batteries 31, 32, whereby the voltage between the terminals of the smoothing capacitor 21 increases to the voltage equivalent to the voltage between the terminals of the series connection of the first and second storage batteries 31, 32.

If the precharge process is completed, the battery ECU 90 turns on the low-potential side main switch SMRL in step S96 and turns off the precharge main switch SMRP in succeeding step S97.

In step S98, the motor ECU 100 turns on the second motor side switch 72.

In step S99, in order to precharge the neutral point capacitor 74, the motor ECU 100 starts switching control that alternately turns on at least the upper and lower arm switches SWH, SWL for one phase or switching control of at least the upper arm switch SWH for one phase in a state in which the lower arm switches SWL for all the phases are turned off. Hence, in step S100, the neutral point capacitor 74 is precharged by the series connection of the first and second storage batteries 31, 32, whereby the voltage between the terminals of the neutral point capacitor 74 increases to the voltage equivalent to the voltage between the terminals of the second storage battery 32. It is noted that, in the precharge process of the neutral point capacitor 74, for example, the motor ECU 100 may perform switching control of the inverter 20 in order to control the neutral point capacitor voltage VN to the second detection voltage VL.

If the precharge process is completed, the battery ECU 90 turns on the first motor side switch 71 in step S101. Hence, the equalization preparation process is completed.

Returning to the above description of FIG. 9, in step S81, the motor ECU 100 performs the first control or the second control.

In step S82, the motor ECU 100 determines whether a stop instruction of the equalization control has been provided.

If determining that no stop instruction has been provided in step S82, the motor ECU 100 proceeds to step S83, in which the motor ECU 100 determines whether the calculated voltage change rate Va has exceeded the voltage threshold value Vhth. If determining that the voltage change rate Va is the voltage threshold value Vhth or lower, the motor ECU 100 determines that no disconnection abnormality has occurred and proceeds to step S81 to continue the equalization control. In contrast, if determining that the voltage change rate Va has exceeded the voltage threshold value Vhth, the motor ECU 100 determines that a disconnection abnormality has occurred and performs a fail-safe process in step S85 described later.

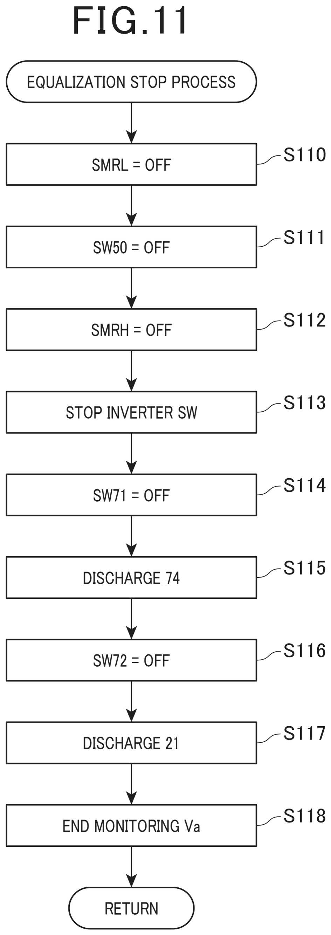

If determining that a stop instruction has been provided in step S82, the motor ECU 100 proceeds to step S84, in which the motor ECU 100 performs an equalization stop process. FIG. 11 is a flowchart illustrating a procedure of the equalization stop process.

The battery ECU 90 turns off the low-potential side main switch SMRL in step S110, turns off the inter-battery switch 50 in succeeding step S111, and turns off the high-potential side main switch SMRH in succeeding step S112.

In step S113, the motor ECU 100 stops the switching control of the inverter 20 for the equalization control. In step S114, the battery ECU 90 turns off the first motor side switch 71.

In step S115, the motor ECU 100 performs switching control of at least the lower arm switch SWL for one phase to discharge the neutral point capacitor 74. Hence, the voltage between the terminals of the neutral point capacitor 74 lowers to 0. If the discharge process is completed, the motor ECU 100 turns off the second motor side switch 72 in step S116.

In step S117, the motor ECU 100 performs switching control of the inverter 20 to discharge the smoothing capacitor 21. Hence, the voltage between the terminals of the smoothing capacitor 21 lowers to 0. If the discharge process is completed, in step S118, the motor ECU 100 ends monitoring the voltage change rate Va, and ends the equalization stop process.

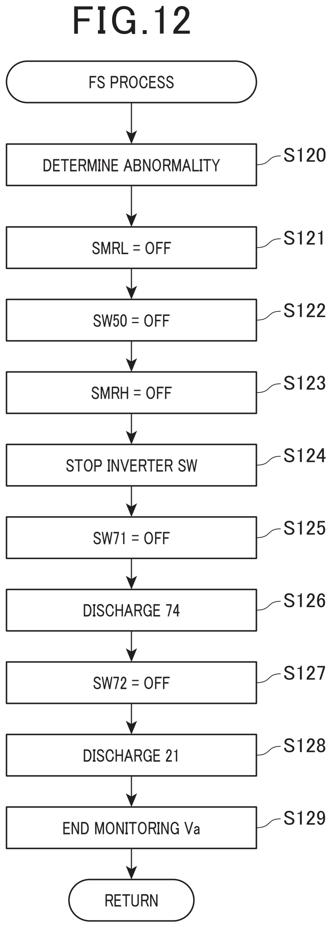

FIG. 12 is a flowchart illustrating a procedure of the fail-safe process.

In step S120, the motor ECU 100 determines that a disconnection abnormality has occurred. Specifically, when the first control is performed, the motor ECU 100 determines that a disconnection abnormality has occurred at a portion of the connection path 73 closer to the second storage battery 32 than the connection point with the neutral point capacitor 74 is. In the present embodiment, the motor ECU 100 determines that, as the disconnection abnormality, an abnormality in which the first motor side switch 71 is turned off has occurred.

In contrast, when the second control is performed, the motor ECU 100 determines that a disconnection abnormality has occurred at a portion of the connection path 73 closer to the armature windings 11 than the connection point with the neutral point capacitor 74 is. In the present embodiment, the motor ECU 100 determines that, as the disconnection abnormality, an abnormality in which the second motor side switch 72 is turned off has occurred.

The battery ECU 90 turns off the low-potential side main switch SMRL in step S122, turns off the inter-battery switch 50 in succeeding step S122, and turns off the high-potential side main switch SMRH in succeeding step S123.

In step S124, the motor ECU 100 stops the switching control of the inverter 20 for the equalization process. In step S125, the battery ECU 90 turns off the first motor side switch 71.

In step S126, as in the processing of step S115, the motor ECU 100 performs switching control of at least the lower arm switch SWL for one phase to discharge the neutral point capacitor 74. Hence, the voltage between the terminals of the neutral point capacitor 74 lowers to 0. If the discharge process is completed, the motor ECU 100 turns off the second motor side switch 72 in step S127.

In step S128, as in the processing of step S117, the motor ECU 100 performs switching control of the inverter 20 to discharge the smoothing capacitor 21. Hence, the voltage between the terminals of the smoothing capacitor 21 lowers to 0. If the discharge process is completed, in step S129, the motor ECU 100 stops monitoring the voltage change rate Va. Hence, the fail-safe process is completed.

According to the present embodiment described above, while the equalization control is performed, occurrence of a disconnection abnormality can be accurately determined, whereby the process can proceed to the fail-safe process.

### <Third embodiment>

Hereinafter, a third embodiment will be described focusing on differences from the first embodiment with reference to the drawings. In the present embodiment, it is determined whether a disconnection abnormality has occurred while the external power supply control is performed.

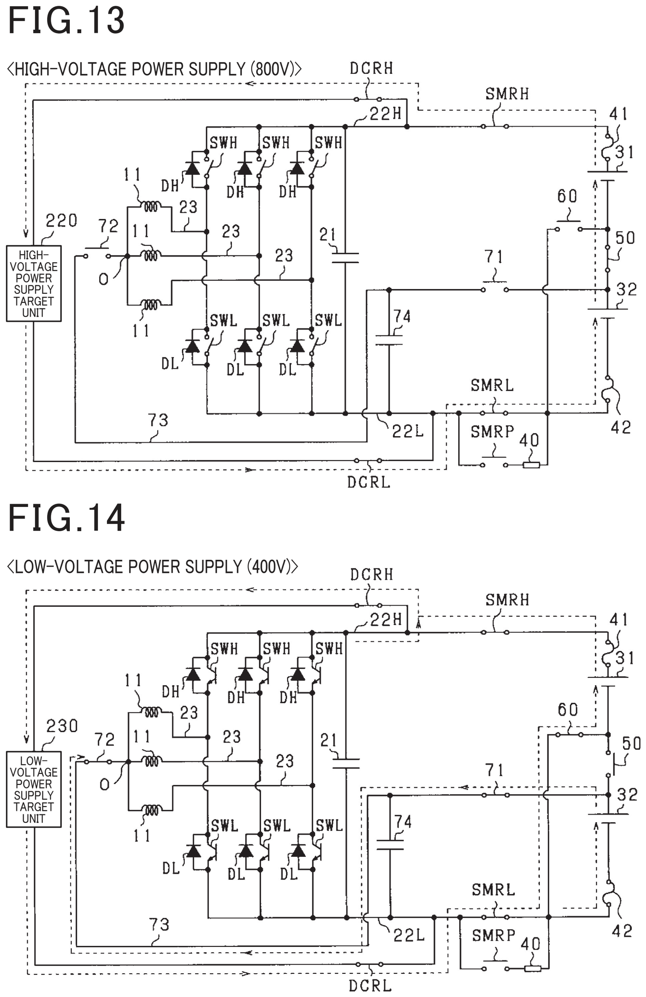

FIG. 13 illustrates control states of the switches when the external power supply control that supplies electric power from the first and second storage batteries 31, 32 to a high-voltage power supply target unit 220 is performed. If determined that the power supply target unit connected to the power conversion device is the high-voltage power supply target unit 220, the motor ECU 100 turns off the second motor side switch 72 and the upper and lower arm switches SWH, SWL for all the phase of the inverter 20 and turns on the connection switches DCRH, DCRL. If determined that the power supply target unit connected to the power conversion device is the high-voltage power supply target unit 220, the battery ECU 90 turns on the high-potential side main switch SMRH, the low-potential side main switch SMRL, and the inter-battery switch 50 and turns off the precharge main switch SMRP, the bypass switch 60, and the first motor side switch 71. Hence, the first storage battery 31 and the second storage battery 32 are connected to the high-voltage power supply target unit 220 in series. Thus, current flows through a closed circuit including the first storage battery 31, the high-potential side path 22H, the high-voltage power supply target unit 220, the low-potential side path 22L, and the second storage battery 32, whereby electric power is supplied from the first storage battery 31 and the second storage battery 32 to the high-voltage power supply target unit 220.

FIG. 14 illustrates control states of the switches when the external power supply control that supplies electric power from the first and second storage batteries 31, 32 to a low-voltage power supply target unit 230 is performed. The rated voltage of the low-voltage power supply target unit 230 is lower than the rated voltage of the high-voltage power supply target unit 220. If determined that a power supply target unit connected to the power conversion device is the low-voltage power supply target unit 230, the motor ECU 100 turns on the second motor side switch 72 and the connection switches DCRH, DCRL. If determined that the power supply target unit connected to the power conversion device is the low-voltage power supply target unit 230, the battery ECU 90 turns on the high-potential side main switch SMRH, the low-potential side main switch SMRL, the bypass switch 60, and the first motor side switch 71 and turns off the precharge main switch SMRP and the inter-battery switch 50. Thus, current flows through a closed circuit including the first storage battery 31, the high-potential side path 22H, the low-voltage power supply target unit 230, the low-potential side path 22L, and the bypass switch 60, whereby electric power is supplied from the first storage battery 31 to the low-voltage power supply target unit 230.

In the external power supply control for the low-voltage power supply target unit 230, the motor ECU 100 performs switching control that alternately turns on at least the upper and lower arm switches SWH, SWL for one phase, or performs switching control of at least the lower arm switch SWL for one phase in a state in which the upper arm switches SWH for all the phases of the inverter 20 are turned off, whereby output voltage of the second storage battery 32 is increased and is supplied to the low-voltage power supply target unit 230. Specifically, the motor ECU 100 performs the above switching control in order to control a voltage between the terminals of the smoothing capacitor 21 detected by the power supply voltage sensor 102 to a target charging voltage. Hence, current flows through a closed circuit including the second storage battery 32, the connection path 73, the armature windings 11, the inverter 20, the high-potential side path 22H, the low-voltage power supply target unit 230, and the low-potential side path 22L, whereby electric power is supplied from the second storage battery 32 to the low-voltage power supply target unit 230.

Incidentally, while the external power supply control is performed, an electrical disconnection abnormality may occur at a portion of the connection path 73 closer to the armature windings 11 than the connection point with the neutral point capacitor 74 is. The disconnection abnormality includes the abnormalities (D) to (F) described above.

While the external power supply control is performed, if a disconnection failure occurs, a voltage between the terminals of the neutral point capacitor 74 becomes excessively high, whereby the neutral point capacitor 74 may fail. Hence, in the present embodiment, as in the first embodiment, a fail-safe process is performed which detects a disconnection abnormality to suppress occurrence of the problems described above. An external power supply control process including the fail-safe process is similar to the above process of FIG. 4. While the external power supply control is performed, if determining that the voltage change rate Va has exceeded the voltage threshold value Vhth, the motor ECU 100 performs the fail-safe process as in step S15.

According to the present embodiment described above, while the external power supply control is performed, occurrence of a disconnection abnormality can be accurately determined, whereby the process can proceed to the fail-safe process.

### <Fourth embodiment>

Hereinafter, a fourth embodiment will be described focusing on differences from the first embodiment with reference to the drawings. In the present embodiment, it is determined whether a disconnection abnormality has occurred based on a detection current IN of the motor current sensor 84.

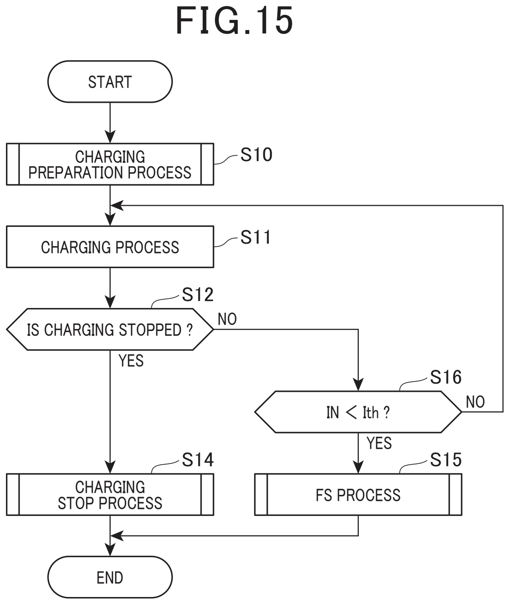

FIG. 15 is a flowchart illustrating a procedure of an external charging control process including the fail-safe process. In the present embodiment, in the above step S21 of FIG. 10 in step S10, the motor ECU 100 starts, instead of monitoring the voltage change rate Va, processing that acquires the detection current IN of the motor current sensor 84 at every control period.

In step S16, the motor ECU 100 determines whether the acquired detection current IN is smaller than a current threshold value Ith. The processing of step S16 is processing for determining whether a disconnection abnormality has occurred. The current threshold value Ith is a value for determining that no current is flowing through the connection path 73, and has been set to, for example, a value slightly larger than 0. If determining that the detection current IN is the current threshold value Ith or larger, the motor ECU 100 determines that no disconnection abnormality has occurred, and proceeds to step S11 to continue the charging process. In contrast, if determining that the detection current IN is smaller than the current threshold value Ith, the motor ECU 100 determines that a disconnection abnormality has occurred, and performs the fail-safe process in step S15.

Also according to the present embodiment described above, it can be determined whether a disconnection abnormality has occurred.

### <Modifications of fourth embodiment>

· The processing for determining a disconnection abnormality based on the detection current IN can be also applied when the equalization control is performed in the second embodiment. In this case, in step S120 in FIG. 12, the motor ECU 100 determines that a disconnection abnormality has occurred on the connection path 73, specifically, may determine that an abnormality in which the first motor side switch 71 or the second motor side switch 72 is turned off has occurred.

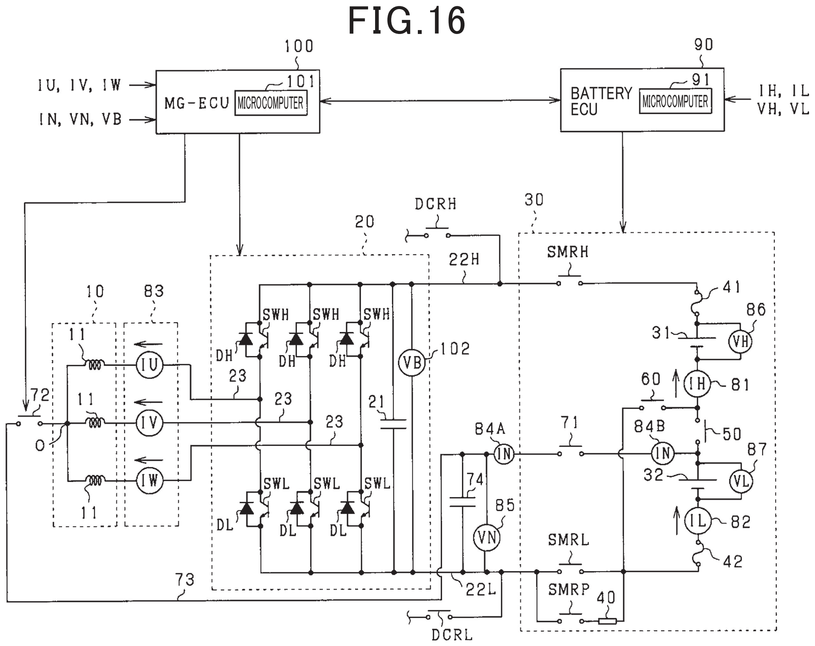

In addition, the processing for determining a disconnection abnormality based on the detection current IN can be also applied when the external power supply control is performed in the third embodiment. In this case, the motor ECU 100 determines that a disconnection abnormality has occurred on the connection path 73, specifically, may determine that a disconnection abnormality in which the first motor side switch 71 or the second motor side switch 72 is turned off has occurred.
· The mounting position of the motor current sensor 84 is not limited to the position illustrated in FIG. 1. For example, as illustrated in FIG. 16, a motor current sensor 84A may be mounted at a portion of the connection path 73 between the connection point with the neutral point capacitor 74 and the first motor side switch 71, or a motor current sensor 84B may be mounted at a portion of the connection path 73 closer to the second storage battery 32 than the first motor side switch 71 is.

### <Fifth embodiment>

Hereinafter, a fifth embodiment will be described focusing on differences from the first embodiment with reference to the drawings. In the present embodiment, as a parameter used for determining whether a disconnection abnormality has occurred, a voltage difference across the first motor side switch 71 is used.

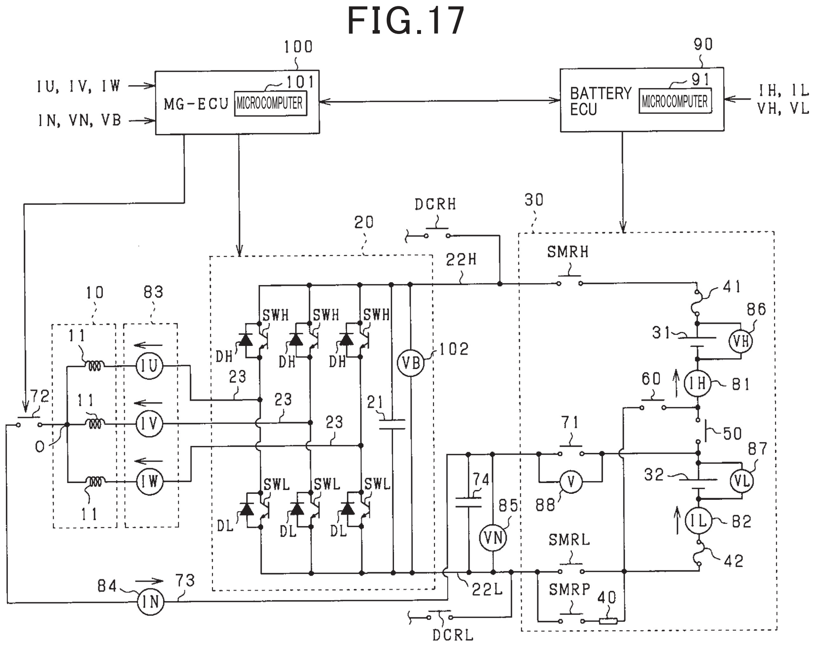

As illustrated in FIG. 17, the power conversion device includes a differential voltage detection unit 88 that detects a voltage difference across the first motor side switch 71. A differential voltage ΔV detected by the differential voltage detection unit 88 is input to the motor ECU 100. The motor ECU 100 acquires the detected differential voltage ΔV at every control period.

In the above step S13 of FIG. 4, the motor ECU 100 determines whether the captured differential voltage ΔV is higher than a threshold value Δth or higher. The threshold value Δth is a value for determining that no current is flowing through the connection path 73. If determining that the differential voltage ΔV is the threshold value Δth or lower, the motor ECU 100 determines that no disconnection abnormality has occurred and proceeds to step S11 to continue the charging process. In contrast, if determining that the differential voltage ΔV is higher than the threshold value Δth, the motor ECU 100 determines that a disconnection abnormality has occurred and performs the fail-safe process in step S15.

### <Modifications of fifth embodiment>

- The processing for determining a disconnection abnormality based on the differential voltage ΔV can be also applied when the equalization control is performed in the second embodiment and when the external power supply control is performed in the third embodiment.

### <Sixth embodiment>

Hereinafter, a sixth embodiment will be described focusing on differences from the first embodiment with reference to the drawings. In the present embodiment, as a parameter used for determining whether a disconnection abnormality has occurred, electric power transferred through the connection path 73 is used.

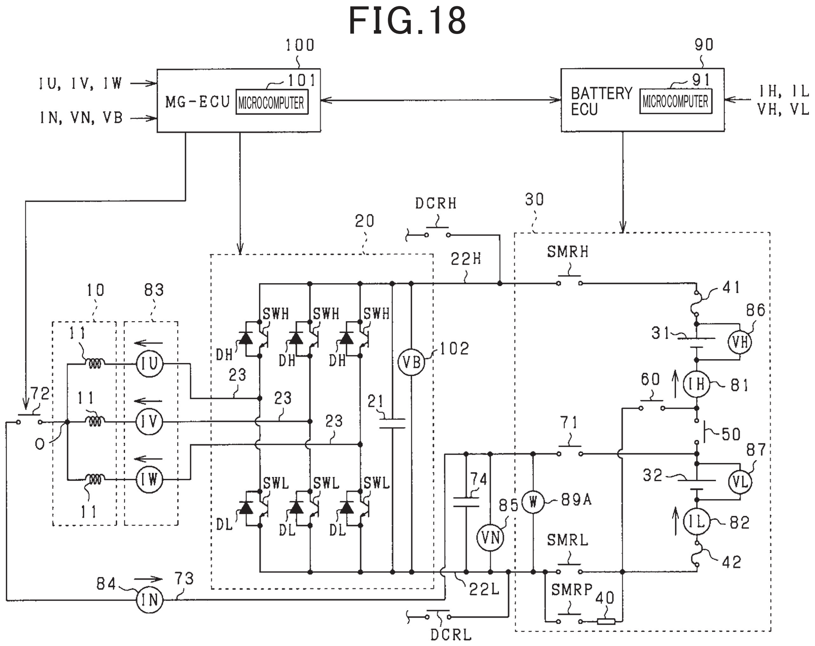

As illustrated in FIG. 18, the power conversion device includes an electric power detection unit 89A that detects electric power transferred through the connection path 73. Electric power WN detected by the electric power detection unit 89A is input to the motor ECU 100. The motor ECU 100 acquires the detected electric power WN at every control period.

In the above step S13 of FIG. 4, the motor ECU 100 determines whether the acquired electric power WN is smaller than an electric power threshold value Wth. The electric power threshold value Wth is a value for determining that no electric power is transferred to the connection path 73, and has been set to, for example, a value slightly larger than 0. If determining that the electric power WN is the electric power threshold value Wth or larger, the motor ECU 100 determines that no disconnection abnormality has occurred, and proceeds to step S11 to continue the charging process. In contrast, if determining that the electric power WN is smaller than the electric power threshold value Wth, the motor ECU 100 determines that a disconnection abnormality has occurred, and performs the fail-safe process in step S15.

### <Modifications of sixth embodiment>

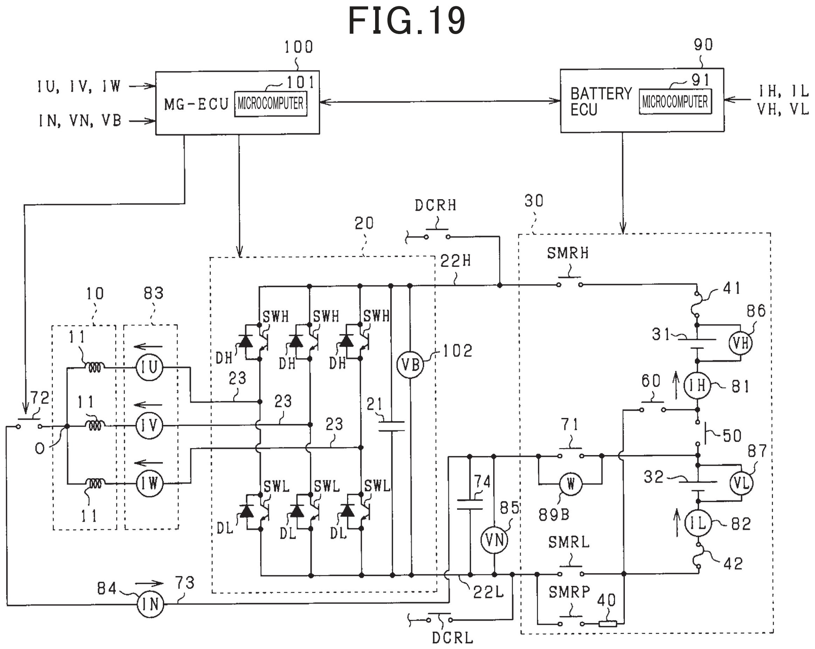

- As a parameter used for determining whether a disconnection abnormality has occurred, differential electric power across the first motor side switch 71 may be used. As illustrated in FIG. 19, the power conversion device includes a differential electric power detection unit 89B that detects a differential electric power across the first motor side switch 71. A differential electric power ΔW detected by the differential electric power detection unit 89B is input to the motor ECU 100. The motor ECU 100 acquires the detected differential electric power ΔW at every control period.

In the above step S13 of FIG. 4, the motor ECU 100 determines whether the captured differential electric power ΔW is lower than the threshold value Δwth. If determining that the differential electric power ΔW is the threshold value Δwth or higher, the motor ECU 100 determines that no disconnection abnormality has occurred and proceeds to step S11 to continue the charging process. In contrast, if determining that the differential electric power ΔW is lower than the threshold value Δwth, the motor ECU 100 determines that a disconnection abnormality has occurred and performs the fail-safe process in step S15.
· The processing for determining a disconnection abnormality based on the differential electric power ΔW can be also applied when the equalization control is performed in the second embodiment and when the external power supply control is performed in the third embodiment.

### <Seventh embodiment>

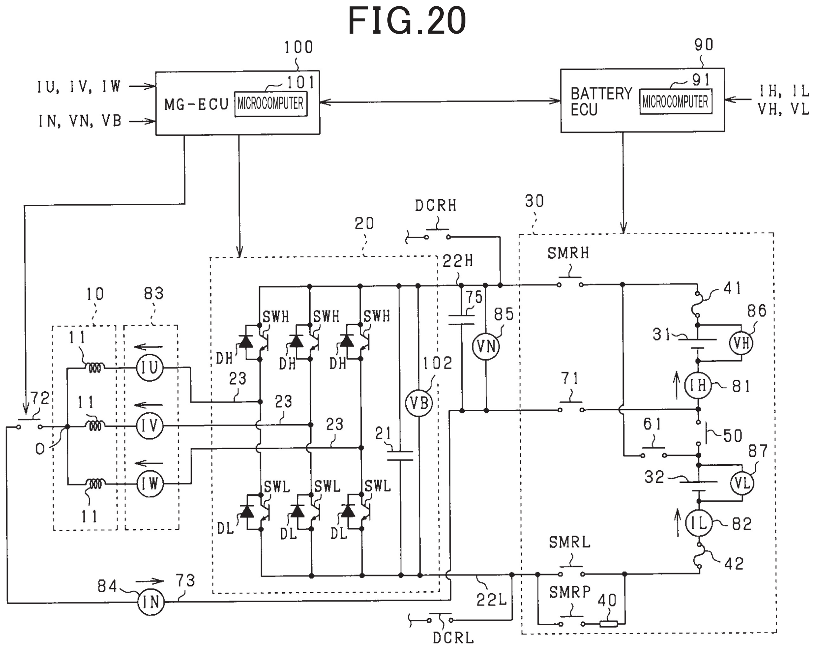

Hereinafter, a seventh embodiment will be described focusing on differences from the first to third embodiments with reference to the drawings. In the present embodiment, as illustrated in FIG. 20, the connection path 73 electrically connects the neutral point O of the armature windings 11 and the negative electrode terminal of the first storage battery 31. In addition, a bypass switch 61 connects the positive electrode terminal of the second storage battery 32 and the high-potential side path 22H. A first terminal of the neutral point capacitor 75 is connected to a portion of the connection path 73 between the first motor side switch 71 and the second motor side switch 72. A second terminal of the neutral point capacitor 75 is connected to a portion of the high-potential side path 22H closer to the inverter 20 than the high-potential side main switch SMRH is.

In the present embodiment, a voltage between the terminals (e.g., a rated voltage) of the first storage battery 31 is higher than a voltage between the terminals (e.g., a rated voltage) of the second storage battery 32.

Next, external charge control, equalization control, and external power supply control of the present embodiment will be described.

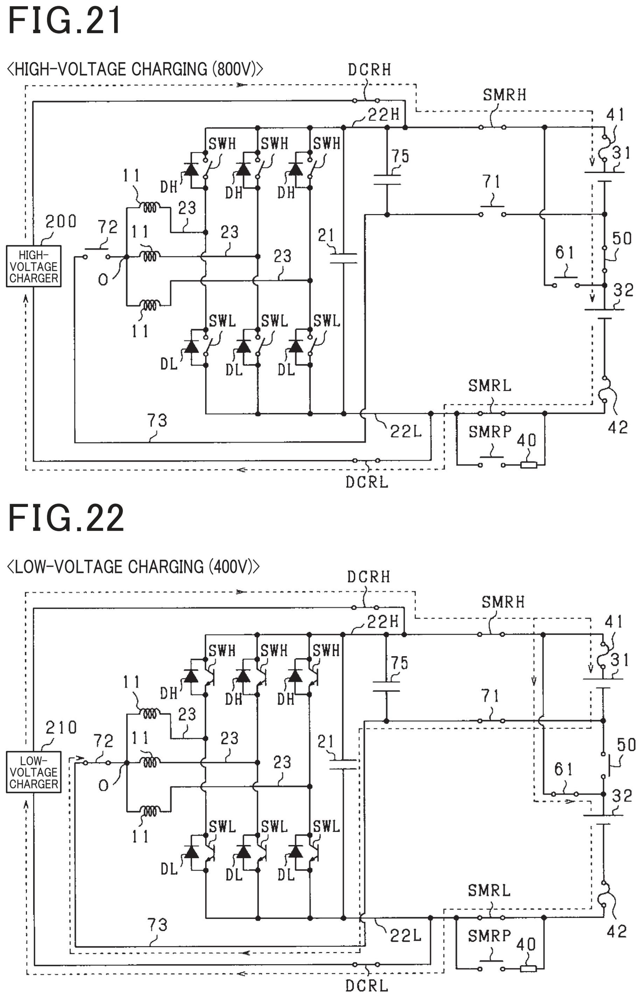

First, the external charge control will be described. FIG. 21 illustrates control states of the switches when the external charging control using the high-voltage charger 200 is performed. If determining that the external charger connected to the power conversion device is the high-voltage charger 200, the motor ECU 100 tuns off the second motor side switch 72 and the upper and lower arm switches SWH, SWL for all the phases of the inverter 20. In addition, if determining that the external charger connected to the power conversion device is the high-voltage charger 200, the battery ECU 90 turns on the high-potential side main switch SMRH, the low-potential side main switch SMRL, and the inter-battery switch 50, and turns off the precharge main switch SMRP, the bypass switch 61, and the first motor side switch 71. Hence, the first storage battery 31 and the second storage battery 32 are charged in a state in which they are connected to the high-voltage charger 200 in series.

FIG. 22 illustrates control states of the switches when the external charge control using the low-voltage charger 210 is performed. If determining that an external charger connected to the power conversion device is the low-voltage charger 210, the motor ECU 100 turns on the second motor side switch 72. If determining that the external charger connected to the power conversion device is the low-voltage charger 210, the battery ECU 90 turns on the high-potential side main switch SMRH, the low-potential side main switch SMRL, the bypass switch 61, and the first motor side switch 71 and turns off the precharge main switch SMRP, and the inter-battery switch 50. Hence, the second storage battery 32 is charged.

In the external charge control by the low-voltage charger 210, the motor ECU 100 performs switching control that alternately turns on at least the upper and lower arm switches SWH, SWL for one phase, or performs switching control of at least the lower arm switch SWL for one phase in a state in which the higher arm switches SWH for all the phases of the inverter 20 are turned off, whereby output voltage of the low-voltage charger 210 is decreased and is supplied to the first storage battery 31. Specifically, the motor ECU 100 performs the above switching control in order to control the neutral point capacitor voltage VN to a target charging voltage. Hence, the first storage battery 31 is charged. Since a voltage between the terminals of the first storage battery 31 is lower than a voltage between the terminals of the second storage battery 32, a target charging voltage of the first storage battery 31 is lower than a target charging voltage of the second storage battery 32.

While the external charge control is performed, an electrical disconnection abnormality may occur at a portion of the connection path 73 closer to the first storage battery 31 than the connection point with the neutral point capacitor 74 is. Also in this case, while the external charge control is performed, as in the first embodiment, it can be determined whether a disconnection abnormality has occurred.

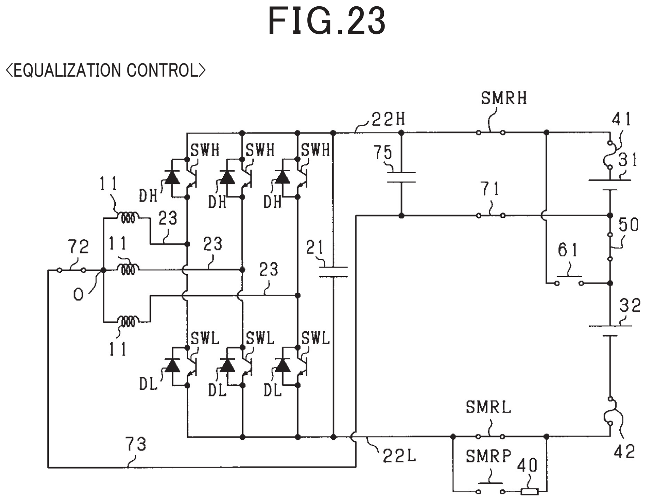

Next, the equalization control will be described. FIG. 23 illustrates control states of the switches when the equalization control is performed. It is noted that when the equalization control is performed, the connection switches DCRH, DCRL are turned off.

The battery ECU 90 turns on the high-potential side main switch SMRH, the low-potential side main switch SMRL, the inter-battery switch 50, and the first motor side switch 71, and turns off the precharge main switch SMRP and the bypass switch 61. The motor ECU 100 turns on the second motor side switch 72 and performs switching control of the inverter 20 for at least one phase in order to transfer electric power from one of the first storage battery 31 and the second storage battery 32 to the other thereof.

While the first control is performed, an electrical disconnection abnormality may occur at a portion of the connection path 73 closer to the first storage battery 31 than the connection point with the neutral point capacitor 74 is. In contrast, while the second control is performed, an electrical disconnection abnormality may occur at a portion of the connection path 73 closer to the armature windings 11 than the connection point with the neutral point capacitor 74 is. Also in this case, while the equalization control is performed, as in the second embodiment, it can be determined whether a disconnection abnormality has occurred.

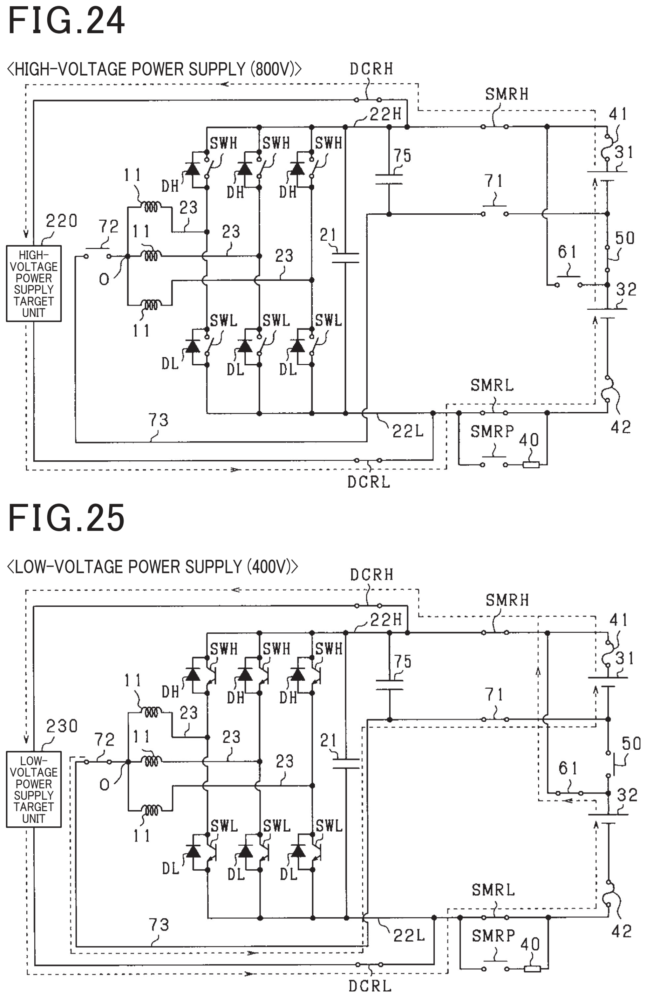

Next, the external power supply control will be described. FIG. 24 illustrates control states of the switches when the external power supply control that supplies electric power from the first and second storage batteries 31, 32 to the high-voltage power supply target unit 220 is performed. If determined that a power supply target unit connected to the power conversion device is the high-voltage power supply target unit 220, the motor ECU 100 turns off the second motor side switch 72 and the upper and lower arm switches SWH, SWL for all the phase of the inverter 20 and turns on the connection switches DCRH, DCRL. If determined that the power supply target unit connected to the power conversion device is the high-voltage power supply target unit 220, the battery ECU 90 turns on the high-potential side main switch SMRH, the low-potential side main switch SMRL, and the inter-battery switch 50, and turns off the precharge main switch SMRP, the bypass switch 61, and the first motor side switch 71. Hence, electric power is supplied from the first storage battery 31 and the second storage battery 32 to the high-voltage power supply target unit 220.

FIG. 25 illustrates control states of the switches when the external power supply control that supplies electric power from the first and second storage batteries 31, 32 to the low-voltage power supply target unit 230 is performed. If determined that a power supply target unit connected to the power conversion device is the low-voltage power supply target unit 230, the motor ECU 100 turns off the second motor side switch 72 and turns on the connection switches DCRH, DCRL. If determined that the power supply target unit connected to the power conversion device is the low-voltage power supply target unit 230, the battery ECU 90 turns on the high-potential side main switch SMRH, the low-potential side main switch SMRL, the bypass switch 61, and the first motor side switch 71, and turns off the precharge main switch SMRP and the inter-battery switch 50. Hence, electric power is supplied from the second storage battery 32 to the low-voltage power supply target unit 230.

In the external power supply control for the low-voltage power supply target unit 230, the motor ECU 100 performs switching control that alternately turns on at least the upper and lower arm switches SWH, SWL for one phase, or performs switching control of at least the upper arm switch SWL for one phase in a state in which the lower arm switches SWL for all the phases of the inverter 20 are turned off, whereby output voltage of the first storage battery 31 is increased and is supplied to the low-voltage power supply target unit 230. Specifically, the motor ECU 100 performs the above switching control in order to control a voltage between the terminals of the smoothing capacitor 21 detected by the power supply voltage sensor 102 to a target charging voltage. Hence, electric power is supplied from the first storage battery 31 to the low-voltage power supply target unit 230.

While the external power supply control is performed for the low-voltage power supply target unit 230, as in the third embodiment, it can be determined whether a disconnection abnormality has occurred.

### <Other embodiments>

It is noted that the above embodiments may be implemented by being modified as below.
· To the configuration of the seventh embodiment, the processing for determining a disconnection abnormality based on the detection current IN, the differential voltage ΔV, the electric power WN, and the differential electric power ΔW described in the fourth to sixth embodiments can be applied.
· Instead of the battery ECU 90, the motor ECU 100 may control the high-potential side main switch SMRH, the low-potential side main switch SMRL, the precharge main switch SMRP, and the first motor side switch 71.

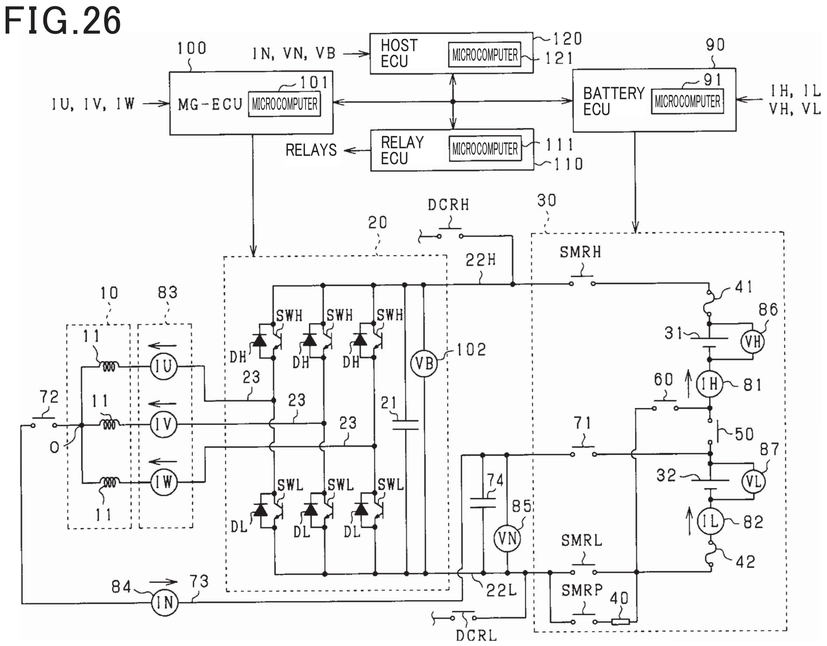

In addition, as illustrated in FIG. 26, the system may include a relay control unit 110 that controls the main switches SMRH, SMRL, SMRP and the connection switches DCRH, DCRL, and a host control unit 120. The host control unit 120 is a host electronic control unit of the battery ECU 90, the motor ECU 100, and the relay control unit 110. The relay control unit 110 has a microcomputer 111. The host control unit 120 has a microcomputer 121. The control units 90, 100, 110, 120 can transmit/receive information to/from each other through a communication unit such as CAN communication.

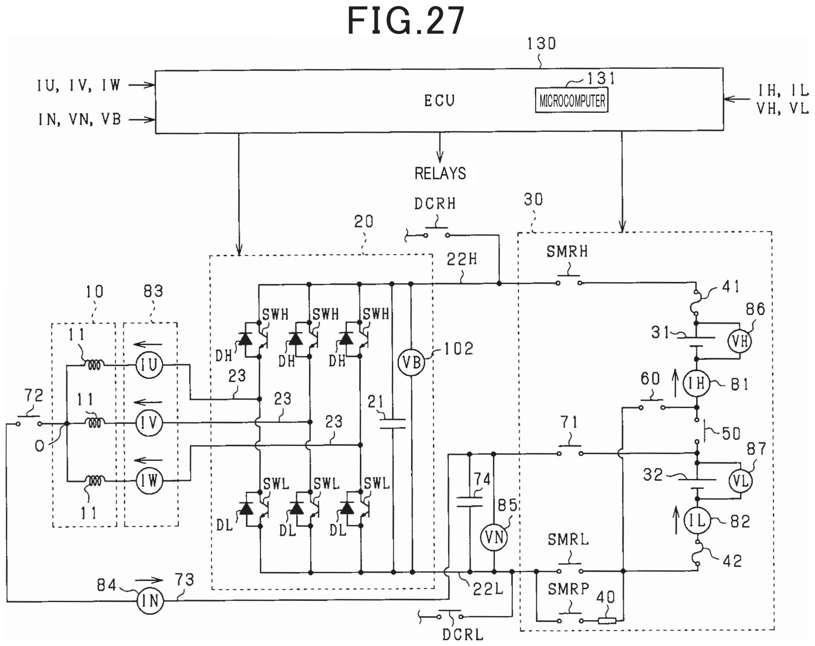

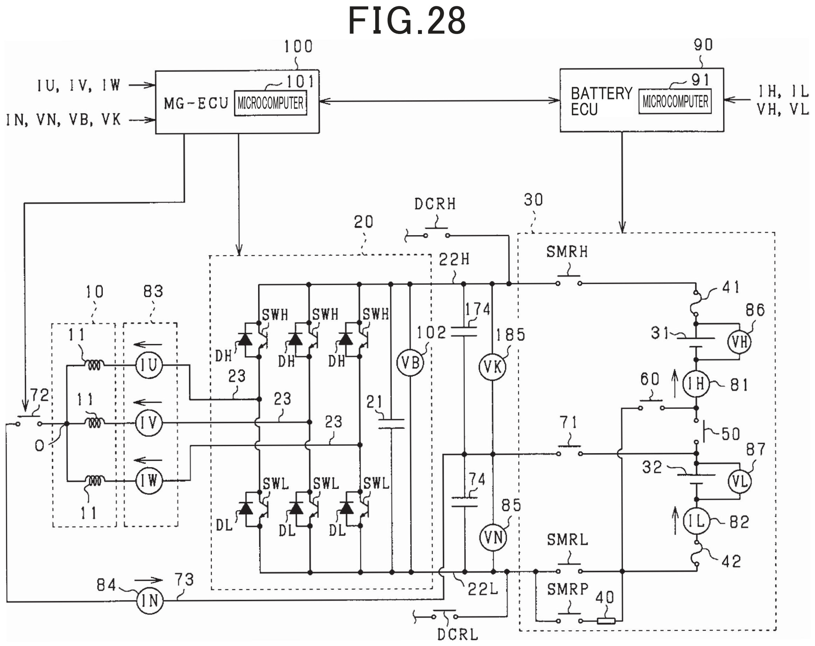

In addition, as illustrated in FIG. 27, the system may include a single control unit 130. The control unit 130 has a microcomputer 131 and an electronic control unit into which functions of the battery ECU 90 and the motor ECU 100 are integrated.
· In the above embodiments, any of the first and second motor side switches 71, 72 may not be included in the power conversion device. Alternatively, neither of the first and second motor side switches 71, 72 may be included in the power conversion device.
· As illustrated in FIG. 28, the power conversion device may further include a neutral point capacitor 174 that connects a portion of the connection path 73 closer to the neutral point O than the first motor side switch 71 and the high-potential side path 22H are, and a capacitor voltage sensor 185 that detects a voltage between the terminals of the neutral point capacitor 174. In this case, for example, when the equalization control is performed, the neutral point capacitor 174 can be used as a smoothing capacitor. It is noted that the above power conversion device illustrated in FIG. 20 may also include a neutral point capacitor that connects a portion of the connection path 73 closer to the neutral point O than the first motor side switch 71 and the low-potential side path 22L are, and a capacitor voltage sensor that detects a voltage between the terminals of the neutral point capacitor.
· The switch of the inverter 20 is not limited to an LGBT, but may be, for example, an N-channel MOSFET including a body diode. In this case, the high-potential side terminal of the N-channel MOSFET is a drain and the low-potential side terminal of the N-channel MOSFET is a source.
· The high-potential side main switch SMRH may not be provided.
· Instead of the low-potential side main switch SMRL, the high-potential side main switch SMRH may be connected with the series connection of the precharge main switch SMRP and the precharge resistor 40 in parallel. In addition, in this case, the low-potential side main switch SMRL may not be provided.
· The fuses 41, 42 may not be provided.
· The motor is not limited to a star-connected one, but may be a Δ-connected one. In addition, the motor and the inverter are not limited to three-phase ones, but may be two-phase ones or four or more-phase ones. In addition, the motor is not limited to a permanent magnet synchronous machine in which the rotor has permanent magnets as field poles, but may be a wound-field synchronous machine in which the rotor has field windings as field poles. In this case, the rotor may include both the field windings and the permanent magnets. Alternatively, the rotor is not limited to the synchronous machine, but may be an induction machine.
· The storage unit to be charged by the external charger is not limited to a storage battery, but may be, for example, one including a high-capacity electric double layer capacitor or one including both the storage battery and the electric double layer capacitor.
· The movable body to which the power conversion device is mounted is not limited to a vehicle but may be, for example, an aircraft or a boat. In addition, the power conversion device may not be mounted to a movable body but may be a stationary device.
· The control unit and the processing thereof described in the present disclosure may be implemented by a dedicated computer that is provided by configuring a processor and a memory that are programmed to execute one or more functions embodied by a computer program. Alternatively, the control unit and the processing thereof described in the present disclosure may be implemented by a dedicated computer that is provided by configuring a processor with one or more dedicated hardware logic circuits. Alternatively, the control unit and the processing thereof described in the present disclosure may be implemented by one or more dedicated computers that are configured by combining a processor and a memory that are programmed to execute one or more functions, with a processor that is configured by one or more hardware logic circuits. Furthermore, the computer program may be stored in a computer readable non-transitory tangible storage medium, as instructions to be executed by a computer.
· Hereinafter, characteristic configurations extracted from the embodiments described above will be described.

### [Configuration 1]

A power conversion device that includes:
an inverter (20) that has an upper arm switch (SWH) and a lower arm switch (SWL); and
a motor (10) that has an armature winding (11) electrically connected to a low-potential side terminal of the upper arm switch and a high-potential side terminal of the lower arm switch, the power conversion device including:
   a high-potential side path (22H) that electrically connects a positive electrode terminal of a first electrical storage unit (31) and a high-potential side terminal of the upper arm switch;
   a low-potential side path (22L) that electrically connects a negative electrode terminal of a second electrical storage unit (32) and a low-potential side terminal of the lower arm switch;
   a connection path (73) that electrically connects a negative electrode terminal of the first electrical storage unit or a positive electrode terminal of the second electrical storage unit, and the armature winding;
   a neutral point capacitor (74, 75) connected to the connection path;
   a parameter detection unit (85, 84, 84A, 84B, 88, 89A, 89B) that detects an electrical parameter of the neutral point capacitor or the connection path; and
   a control unit (100, 90, 110, 130), wherein
   when performing switching control of the inverter to supply current to the connection path, the control unit performs determination processing that determines whether an electrical disconnection abnormality has occurred on the connection path, based on a detection value of the parameter detection unit.

### [Configuration 2]

The power conversion device according to configuration 1, further including:
an inter-electrical storage unit switch (50) that, if turned on, electrically connects the negative electrode terminal of the first electrical storage unit and the positive electrode terminal of the second electrical storage unit and, if turned off, electrically disconnects the negative electrode terminal of the first electrical storage unit and the positive electrode terminal of the second electrical storage unit; and
a bypass switch (60) that, if turned on, electrically connects the negative electrode terminal of the first electrical storage unit and the negative electrode terminal of the second electrical storage unit and, if turned off, electrically disconnects the negative electrode terminal of the first electrical storage unit and the negative electrode terminal of the second electrical storage unit, wherein
the connection path electrically connects the armature winding and the positive electrode terminal of the second electrical storage unit, and
the neutral point capacitor (74) electrically connects the connection path and the low-potential side path.

### [Configuration 3]

The power conversion device according to configuration 2,
when the high-potential side path and the low-potential side path are electrically connected with an external charger (210), in a state in which the inter-electrical storage unit switch is turned off and the bypass switch is turned on, the control unit performs external charge control that performs switching control of the upper arm switch to supply current to a closed circuit including the external charger, the inverter, the armature winding, the connection path, and the second electrical storage unit, thereby charging the second electrical storage unit, and
while the external charge control is performed, the control unit performs, as the determination processing, processing that determines whether an electrical disconnection abnormality has occurred at a portion of the connection path closer to the second electrical storage unit than a connection point with the neutral point capacitor is.

### [Configuration 4]

The power conversion device according to configuration 3, further including a motor side switch (71) provided at a portion of the connection path closer to the second electrical storage unit than the connection point with the neutral point capacitor is, wherein
the control unit turns on the motor side switch in the external charge control, and
the disconnection abnormality is an abnormality in which the motor side switch is turned off.

### [Configuration 5]

The power conversion device according to configuration 2,
in a state in which the inter-electrical storage unit switch is turned on and the bypass switch is turned off, the control unit performs first control that performs switching control of the upper arm switch to supply current from the first electrical storage unit to the second electrical storage unit through the inverter, the armature winding, and the connection path,
in a state in which the inter-electrical storage unit switch is turned on and the bypass switch is turned off, the control unit performs second control that performs switching control of the lower arm switch to supply current from the second electrical storage unit to the first electrical storage unit through the connection path, the armature winding, and the inverter,
while the first control is performed, the control unit performs, as the determination processing, processing that determines whether an electrical disconnection abnormality has occurred at a portion of the connection path closer to the second electrical storage unit than the connection point with the neutral point capacitor is, and
while the second control is performed, the control unit performs, as the determination processing, processing that determines whether an electrical disconnection abnormality has occurred at a portion of the connection path closer to the armature winding than the connection point with the neutral point capacitor is.

### [Configuration 6]

The power conversion device according to configuration 5, further including:
a first motor side switch (71) provided at a portion of the connection path closer to the second electrical storage unit than the connection point with the neutral point capacitor is; and
a second motor side switch (72) provided at the portion of the connection path closer to the armature winding than the connection point with the neutral point capacitor is,
in the first control and the second control, the control unit turns on the first motor side switch and the second motor side switch,
the disconnection abnormality caused while the first control is performed is an abnormality in which the first motor side switch is turned off, and
the disconnection abnormality caused while the second control is performed is an abnormality in which the second motor side switch is turned off.

### [Configuration 7]

The power conversion device according to configuration 2, wherein
when the high-potential side path and the low-potential side path are electrically connected with an external power supply target unit (230), in a state in which the inter-electrical storage unit switch is turned off and the bypass switch is turned on, the control unit performs external power supply control that performs switching control of the lower arm switch to supply current to the external power supply target unit from the second electrical storage unit to the external power supply target unit through the connection path, the armature winding, and the inverter, and
while the external power supply control is performed, the control unit performs, as the determination processing, processing that determines whether an electrical disconnection abnormality has occurred at a portion of the connection path closer to the armature winding than a connection point with the neutral point capacitor is.

### [Configuration 8]

The power conversion device according to configuration 7, further including a motor side switch (72) provided at a portion of the connection path closer to the armature winding than the connection point with the neutral point capacitor is, wherein
in the external power supply control, the control unit turns on the motor side switch, and
the disconnection abnormality is an abnormality in which the motor side switch is turned off.

### [Configuration 9]

The power conversion device according to configuration 1, further including:
an inter-electrical storage unit switch (50) that, if turned on, electrically connects the negative electrode terminal of the first electrical storage unit and the positive electrode terminal of the second electrical storage unit and, if turned off, electrically disconnects the negative electrode terminal of the first electrical storage unit and the positive electrode terminal of the second electrical storage unit; and
a bypass switch (61) that, if turned on, electrically connects the positive electrode terminal of the first electrical storage unit and the positive electrode terminal of the second electrical storage unit and, if turned off, electrically disconnects the positive electrode terminal of the first electrical storage unit and the positive electrode terminal of the second electrical storage unit, wherein
the connection path electrically connects the armature winding and the negative electrode terminal of the first electrical storage unit, and
the neutral point capacitor (75) electrically connects the connection path and the high-potential side path.

### [Configuration 10]

The power conversion device according to configuration 9, wherein
when the high-potential side path and the low-potential side path are electrically connected with an external charger (210), in a state in which the inter-electrical storage unit switch is turned off and the bypass switch is turned on, the control unit performs external charging control that performs switching control of the lower arm switch to supply current to a closed circuit including the external charger, the first electrical storage unit, the connection path, the armature winding, and the inverter, thereby charging the first electrical storage unit, and
while the external charging control is performed, the control unit performs, as the determination processing, processing that determines whether an electrical disconnection abnormality has occurred at a portion of the connection path closer to the first electrical storage unit than a connection point with the neutral point capacitor is.

### [Configuration 11]

The power conversion device according to configuration 10, further including a motor side switch (71) provided at a portion of the connection path closer to the first electrical storage unit than the connection point with the neutral point capacitor is, wherein
in the external charging control, the control unit turns on the motor side switch, and
the disconnection abnormality is an abnormality in which the motor side switch is turned off.

### [Configuration 12]

The power conversion device according to configuration 9,
in a state in which the inter-electrical storage unit switch is turned on and the bypass switch is turned off, the control unit performs first control that performs switching control of the upper arm switch to supply current from the first electrical storage unit to the second electrical storage unit through the inverter, the armature winding, and the connection path,
in a state in which the inter-electrical storage unit switch is turned on and the bypass switch is turned off, the control unit performs second control that performs switching control of the lower arm switch to supply current from the second electrical storage unit to the first electrical storage unit through the connection path, the armature winding, and the inverter,
while the first control is performed, the control unit performs, as the determination processing, processing that determines whether an electrical disconnection abnormality has occurred at a portion of the connection path closer to the first electrical storage unit than a connection point with the neutral point capacitor is, and
while the second control is performed, the control unit performs, as the determination processing, processing that determines whether an electrical disconnection abnormality has occurred at a portion of the connection path closer to the armature winding than the connection point with the neutral point capacitor is.

### [Configuration 13]

The power conversion device according to configuration 12, further including:
a first motor side switch (71) provided at a portion of the connection path closer to the first electrical storage unit than the connection point with the neutral point capacitor is; and
a second motor side switch (72) provided at a portion of the connection path closer to the armature winding than the connection point with the neutral point capacitor is, wherein
in the first control and the second control, the control unit turns on the first motor side switch and the second motor side switch,
the disconnection abnormality caused while the first control is performed is an abnormality in which the first motor side switch is turned off, and
the disconnection abnormality caused while the second control is performed is an abnormality in which the second motor side switch is turned off.

### [Configuration 14]

The power conversion device according to configuration 9, wherein
when the high-potential side path and the low-potential side path are electrically connected with an external power supply target unit (230), in a state in which the inter-electrical storage unit switch is turned off and the bypass switch is turned on, the control unit performs external power supply control that performs switching control of the lower arm switch to supply current to the external power supply target unit through a closed circuit including the external power supply target unit, the first electrical storage unit, the connection path, the armature winding, and the inverter, and
while the external power supply control is performed, the control unit performs, as the determination processing, processing that determines whether an electrical disconnection abnormality has occurred at a portion of the connection path closer to the armature winding than a connection point with the neutral point capacitor is.

### [Configuration 15]

The power conversion device according to configuration 14, further including a motor side switch (72) provided at a portion of the connection path closer to the armature winding than the connection point with the neutral point capacitor is, wherein
in the external power supply control, the control unit turns on the motor side switch, and
the disconnection abnormality is an abnormality in which the motor side switch is turned off.

### [Configuration 16]

The power conversion device according to any one of configurations 1 to 15, wherein
the parameter detection unit (85) detects a voltage between terminals of the neutral point capacitor, and
the control unit performs, as the determination processing, processing that calculates a change rate (Va) of the detected voltage between terminals and determines that the disconnection abnormality has occurred if the calculated change rate has exceeded a threshold value (Vhth).

### [Configuration 17]

The power conversion device according to any one of configurations 1 to 15, wherein
the parameter detection unit (84, 84A, 84B) detects current flowing through the connection path, and
the control unit performs, as the determination processing, processing that determines whether the disconnection abnormality has occurred, based on the detected current (IN).

### [Configuration 18]

The power conversion device according to any one of configurations 1 to 17, wherein
if determining that the disconnection abnormality has occurred, the control unit stops the switching control of the inverter.

### [Configuration 19]

The power conversion device according to any one of configurations 1 to 18, further including:
a smoothing capacitor (21) that is connected to a series connection of the upper arm switch and the lower arm switch in parallel; and
a main switch (SMRH, SMRL) provided to at least one of the high-potential side path and the low-potential side path, wherein
if determining that the disconnection abnormality has occurred, the control unit performs, after turning off the main switch, switching control of the inverter to discharge the smoothing capacitor, and stops the switching control of the inverter after the discharge is completed.
· The present disclosure has so far been described based on embodiments. However, the present disclosure should not be construed as being limited to these embodiments or the structures. The present disclosure should encompass various modifications, and modifications within the range of equivalence. In addition, various combinations and modes, as well as other combinations and modes, including those which include one or more additional elements, or those which include fewer elements should be construed as being within the scope and spirit of the present disclosure.

## Claims

1. A power conversion device that includes:
an inverter (20) that has an upper arm switch (SWH) and a lower arm switch (SWL); and
a motor (10) that has an armature winding (11) electrically connected to a low-potential side terminal of the upper arm switch and a high-potential side terminal of the lower arm switch, the power conversion device comprising:
a high-potential side path (22H) that electrically connects a positive electrode terminal of a first electrical storage unit (31) and a high-potential side terminal of the upper arm switch;
a low-potential side path (22L) that electrically connects a negative electrode terminal of a second electrical storage unit (32) and a low-potential side terminal of the lower arm switch;
a connection path (73) that electrically connects a negative electrode terminal of the first electrical storage unit or a positive electrode terminal of the second electrical storage unit, and the armature winding;
a neutral point capacitor (74, 75) connected to the connection path;
a parameter detection unit (85, 84, 84A, 84B, 88, 89A, 89B) that detects an electrical parameter of the neutral point capacitor or the connection path; and
a control unit (100, 90, 110, 130), wherein
when performing switching control of the inverter to supply current to the connection path, the control unit performs determination processing that determines whether an electrical disconnection abnormality has occurred on the connection path, based on a detection value of the parameter detection unit.

2. The power conversion device according to claim 1, further comprising:
an inter-electrical storage unit switch (50) that, if turned on, electrically connects the negative electrode terminal of the first electrical storage unit and the positive electrode terminal of the second electrical storage unit and, if turned off, electrically disconnects the negative electrode terminal of the first electrical storage unit and the positive electrode terminal of the second electrical storage unit; and
a bypass switch (60) that, if turned on, electrically connects the negative electrode terminal of the first electrical storage unit and the negative electrode terminal of the second electrical storage unit and, if turned off, electrically disconnects the negative electrode terminal of the first electrical storage unit and the negative electrode terminal of the second electrical storage unit, wherein
the connection path electrically connects the armature winding and the positive electrode terminal of the second electrical storage unit, and
the neutral point capacitor (74) electrically connects the connection path and the low-potential side path.

3. The power conversion device according to claim 2,
when the high-potential side path and the low-potential side path are electrically connected with an external charger (210), in a state in which the inter-electrical storage unit switch is turned off and the bypass switch is turned on, the control unit performs external charge control that performs switching control of the upper arm switch to supply current to a closed circuit including the external charger, the inverter, the armature winding, the connection path, and the second electrical storage unit, thereby charging the second electrical storage unit, and
while the external charge control is performed, the control unit performs, as the determination processing, processing that determines whether an electrical disconnection abnormality has occurred at a portion of the connection path closer to the second electrical storage unit than a connection point with the neutral point capacitor is.

4. The power conversion device according to claim 3, further comprising a motor side switch (71) provided at a portion of the connection path closer to the second electrical storage unit than the connection point with the neutral point capacitor is, wherein
the control unit turns on the motor side switch in the external charge control, and
the disconnection abnormality is an abnormality in which the motor side switch is turned off.

5. The power conversion device according to claim 2,
in a state in which the inter-electrical storage unit switch is turned on and the bypass switch is turned off, the control unit performs first control that performs switching control of the upper arm switch to supply current from the first electrical storage unit to the second electrical storage unit through the inverter, the armature winding, and the connection path,
in a state in which the inter-electrical storage unit switch is turned on and the bypass switch is turned off, the control unit performs second control that performs switching control of the lower arm switch to supply current from the second electrical storage unit to the first electrical storage unit through the connection path, the armature winding, and the inverter,
while the first control is performed, the control unit performs, as the determination processing, processing that determines whether an electrical disconnection abnormality has occurred at a portion of the connection path closer to the second electrical storage unit than the connection point with the neutral point capacitor is, and
while the second control is performed, the control unit performs, as the determination processing, processing that determines whether an electrical disconnection abnormality has occurred at a portion of the connection path closer to the armature winding than the connection point with the neutral point capacitor is.

6. The power conversion device according to claim 5, further comprising:
a first motor side switch (71) provided at a portion of the connection path closer to the second electrical storage unit than the connection point with the neutral point capacitor is; and
a second motor side switch (72) provided at the portion of the connection path closer to the armature winding than the connection point with the neutral point capacitor is,
in the first control and the second control, the control unit turns on the first motor side switch and the second motor side switch,
the disconnection abnormality caused while the first control is performed is an abnormality in which the first motor side switch is turned off, and
the disconnection abnormality caused while the second control is performed is an abnormality in which the second motor side switch is turned off.

7. The power conversion device according to claim 2, wherein
when the high-potential side path and the low-potential side path are electrically connected with an external power supply target unit (230), in a state in which the inter-electrical storage unit switch is turned off and the bypass switch is turned on, the control unit performs external power supply control that performs switching control of the lower arm switch to supply current to the external power supply target unit from the second electrical storage unit to the external power supply target unit through the connection path, the armature winding, and the inverter, and
while the external power supply control is performed, the control unit performs, as the determination processing, processing that determines whether an electrical disconnection abnormality has occurred at a portion of the connection path closer to the armature winding than a connection point with the neutral point capacitor is.

8. The power conversion device according to claim 7, further comprising a motor side switch (72) provided at a portion of the connection path closer to the armature winding than the connection point with the neutral point capacitor is, wherein
in the external power supply control, the control unit turns on the motor side switch, and
the disconnection abnormality is an abnormality in which the motor side switch is turned off.

9. The power conversion device according to claim 1, further comprising:
an inter-electrical storage unit switch (50) that, if turned on, electrically connects the negative electrode terminal of the first electrical storage unit and the positive electrode terminal of the second electrical storage unit and, if turned off, electrically disconnects the negative electrode terminal of the first electrical storage unit and the positive electrode terminal of the second electrical storage unit; and
a bypass switch (61) that, if turned on, electrically connects the positive electrode terminal of the first electrical storage unit and the positive electrode terminal of the second electrical storage unit and, if turned off, electrically disconnects the positive electrode terminal of the first electrical storage unit and the positive electrode terminal of the second electrical storage unit, wherein
the connection path electrically connects the armature winding and the negative electrode terminal of the first electrical storage unit, and
the neutral point capacitor (75) electrically connects the connection path and the high-potential side path.

10. The power conversion device according to claim 9, wherein
when the high-potential side path and the low-potential side path are electrically connected with an external charger (210), in a state in which the inter-electrical storage unit switch is turned off and the bypass switch is turned on, the control unit performs external charging control that performs switching control of the lower arm switch to supply current to a closed circuit including the external charger, the first electrical storage unit, the connection path, the armature winding, and the inverter, thereby charging the first electrical storage unit, and
while the external charging control is performed, the control unit performs, as the determination processing, processing that determines whether an electrical disconnection abnormality has occurred at a portion of the connection path closer to the first electrical storage unit than a connection point with the neutral point capacitor is.

11. The power conversion device according to claim 10, further comprising a motor side switch (71) provided at a portion of the connection path closer to the first electrical storage unit than the connection point with the neutral point capacitor is, wherein
in the external charging control, the control unit turns on the motor side switch, and
the disconnection abnormality is an abnormality in which the motor side switch is turned off.

12. The power conversion device according to claim 9,
in a state in which the inter-electrical storage unit switch is turned on and the bypass switch is turned off, the control unit performs first control that performs switching control of the upper arm switch to supply current from the first electrical storage unit to the second electrical storage unit through the inverter, the armature winding, and the connection path,
in a state in which the inter-electrical storage unit switch is turned on and the bypass switch is turned off, the control unit performs second control that performs switching control of the lower arm switch to supply current from the second electrical storage unit to the first electrical storage unit through the connection path, the armature winding, and the inverter,
while the first control is performed, the control unit performs, as the determination processing, processing that determines whether an electrical disconnection abnormality has occurred at a portion of the connection path closer to the first electrical storage unit than a connection point with the neutral point capacitor is, and
while the second control is performed, the control unit performs, as the determination processing, processing that determines whether an electrical disconnection abnormality has occurred at a portion of the connection path closer to the armature winding than the connection point with the neutral point capacitor is.

13. The power conversion device according to claim 12, further comprising:
a first motor side switch (71) provided at a portion of the connection path closer to the first electrical storage unit than the connection point with the neutral point capacitor is; and
a second motor side switch (72) provided at a portion of the connection path closer to the armature winding than the connection point with the neutral point capacitor is, wherein
in the first control and the second control, the control unit turns on the first motor side switch and the second motor side switch,
the disconnection abnormality caused while the first control is performed is an abnormality in which the first motor side switch is turned off, and
the disconnection abnormality caused while the second control is performed is an abnormality in which the second motor side switch is turned off.

14. The power conversion device according to claim 9, wherein
when the high-potential side path and the low-potential side path are electrically connected with an external power supply target unit (230), in a state in which the inter-electrical storage unit switch is turned off and the bypass switch is turned on, the control unit performs external power supply control that performs switching control of the lower arm switch to supply current to the external power supply target unit through a closed circuit including the external power supply target unit, the first electrical storage unit, the connection path, the armature winding, and the inverter, and
while the external power supply control is performed, the control unit performs, as the determination processing, processing that determines whether an electrical disconnection abnormality has occurred at a portion of the connection path closer to the armature winding than a connection point with the neutral point capacitor is.

15. The power conversion device according to claim 14, further comprising a motor side switch (72) provided at a portion of the connection path closer to the armature winding than the connection point with the neutral point capacitor is, wherein
in the external power supply control, the control unit turns on the motor side switch, and
the disconnection abnormality is an abnormality in which the motor side switch is turned off.

16. The power conversion device according to any one of claims 1 to 15, wherein
the parameter detection unit (85) detects a voltage between terminals of the neutral point capacitor, and
the control unit performs, as the determination processing, processing that calculates a change rate (Va) of the detected voltage between terminals and determines that the disconnection abnormality has occurred if the calculated change rate has exceeded a threshold value (Vhth).

17. The power conversion device according to any one of claims 1 to 15, wherein
the parameter detection unit (84, 84A, 84B) detects current flowing through the connection path, and
the control unit performs, as the determination processing, processing that determines whether the disconnection abnormality has occurred, based on the detected current (IN).

18. The power conversion device according to any one of claims 1 to 15, wherein
if determining that the disconnection abnormality has occurred, the control unit stops the switching control of the inverter.

19. The power conversion device according to any one of claims 1 to 15, further comprising:
a smoothing capacitor (21) that is connected to a series connection of the upper arm switch and the lower arm switch in parallel; and
a main switch (SMRH, SMRL) provided to at least one of the high-potential side path and the low-potential side path, wherein
if determining that the disconnection abnormality has occurred, the control unit performs, after turning off the main switch, switching control of the inverter to discharge the smoothing capacitor, and stops the switching control of the inverter after the discharge is completed.

20. A program applied to a power conversion device that includes:
an inverter (20) that has an upper arm switch (SWH) and a lower arm switch (SWL);
a motor (10) that has an armature winding (11) electrically connected to a low-potential side terminal of the upper arm switch and a high-potential side terminal of the lower arm switch; and
a computer (101, 91, 111, 131), wherein
the power conversion device includes:
a high-potential side path (22H) that electrically connects a positive electrode terminal of a first electrical storage unit (31) and a high-potential side terminal of the upper arm switch;
a low-potential side path (22L) that electrically connects a negative electrode terminal of a second electrical storage unit (32) and a low-potential side terminal of the lower arm switch;
a connection path (73) that electrically connects a negative electrode terminal of the first electrical storage unit or a positive electrode terminal of the second electrical storage unit, and the armature winding;
a neutral point capacitor (74, 75) connected to the connection path; and
a parameter detection unit (85, 84, 84A, 84B, 88, 89A, 89B) that detects an electrical parameter of the neutral point capacitor or the connection path, and
when performing switching control of the inverter to supply current to the connection path, the program causes the computer to perform determination processing that determines whether an electrical disconnection abnormality has occurred on the connection path, based on a detection value of the parameter detection unit.
